(19) Europäisches Patentamt / European Patent Office / Office européen des brevets

(11) **EP 2 866 278 B1**

(12) **EUROPEAN PATENT SPECIFICATION**

(45) Date of publication and mention
of the grant of the patent:
**16.11.2016 Bulletin 2016/46**

(21) Application number: **14786588.5**

(22) Date of filing: **25.08.2014**

(51) Int Cl.:
*H01M 2/16* (2006.01)    *H01M 2/14* (2006.01)

(86) International application number:
**PCT/JP2014/072154**

(87) International publication number:
**WO 2015/029944 (05.03.2015 Gazette 2015/09)**

(54) **SEPARATOR FOR BATTERIES AND METHOD FOR PRODUCING SAME**

BATTERIESEPARATOR UND HERSTELLUNGSVERFAHREN DAFÜR

SÉPARATEUR POUR PILES ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.08.2013 JP 2013179078**

(43) Date of publication of application:
**29.04.2015 Bulletin 2015/18**

(73) Proprietor: **Toray Battery Separator Film Co., Ltd.
Tochigi 329-2763 (JP)**

(72) Inventors:
• **MIZUNO, Naoki**
  **Nasushiobara-shi**
  **Tochigi 329-2763 (JP)**
• **KIMISHIMA, Kotaro**
  **Nasushiobara-shi**
  **Tochigi 329-2763 (JP)**

(74) Representative: **Webster, Jeremy Mark et al
Mewburn Ellis LLP
City Tower
40 Basinghall Street
London EC2V 5DE (GB)**

(56) References cited:
EP-A1- 1 956 041       EP-A1- 2 736 095
EP-A1- 2 750 216       WO-A1-2007/060991
WO-A1-2010/008003      JP-A- 2004 227 972
JP-A- 2013 046 998

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a battery separator including a laminated polyolefin microporous membrane and a method of producing the same.

Background Art

Nonaqueous electrolyte batteries typified by lithium ion secondary batteries have a high energy density, and thus have been widely used as a power source, for example, for notebook computers, cellular phones, and electric automobiles.

These nonaqueous electrolyte batteries with a high energy density is prone to abnormal heat generation when an internal short circuit occurs, and thus have been required to have a function of preventing a temperature rise above a certain level. In this regard, microporous membranes composed mainly of polyolefins have been used as a separator to ensure the safety. Polyolefin microporous membranes have shutdown properties such that resin is melted at about 130°C and blocks pores to shut down the flow of ions, and thus can prevent an abnormal temperature rise in a battery due to an internal short circuit. At this time, it is necessary to block the pores quickly at a certain temperature in order to maintain the safety of the battery.

In addition, polyolefin microporous membranes have been required to be heat-resistant because they shrink and rupture due to a temperature rise in a battery, due to which electrodes can come into contact with each other to cause a short circuit, resulting in abnormal heat generation in the battery.

Furthermore, in nonaqueous electrolyte batteries, in particular, lithium ion batteries, when lithium metal is used as a negative electrode, dendritic lithium metal, as a result of repeated charge and discharge, may precipitate and break through a separator to cause an internal short circuit, and thus polyolefin microporous membranes are required to have physical strength.

In response, investigations have been made to improve heat resistance and/or physical strength by laminating a modifying porous layer comprising a water-soluble resin or water-dispersible resin and fine particles on a polyolefin microporous membrane. However, there is a problem of deterioration of shutdown properties and reduction in air resistance of the polyolefin microporous membrane due to infiltration of the resin component into pores of the membrane. In addition, the resin component sometimes formed a thin film on the surface of the polyolefin microporous membrane to further reduce the air resistance. Furthermore, during the process for laminating a modifying porous layer on the polyolefin microporous membrane, the slitting process, or the battery assembly process, the modifying porous layer can be peeled off, in which case it is difficult to secure the safety.

Prior Art Documents

Patent Documents

Patent document 1 : JP2013-46998A
Patent document 2: JP2004-227972A
Patent document 3 : JP2012-226921A
Patent document 4: WO2007/60991
Patent document 5: EP2750216A1

Patent Document 1 discloses a laminated porous film in which a heat-resistant layer (modifying porous layer) is laminated by applying a slurry comprising 3500 parts by weight of alumina and 100 parts by weight, in terms of sodium carboxymethylcellulose (hereinafter also referred to as "CMC" for short), of CMC solution to the surface of a substrate polyethylene porous film.

Patent Document 2 discloses a nonaqueous electrolyte secondary battery separator obtained by laminating a porous layer comprising 591 g of ion-exchanged water, 9 g of water-soluble polymer CMC, and 45 g of alumina fine particles on a porous polyethylene film. This separator has dimensional stability and load characteristics.

Patent Document 3 discloses that a laminated film comprising a heat-resistant layer composed mainly of a porous polyolefin layer and filler, which is excellent in heat-shrinkable properties and shape retention can be obtained if the overall basis weight of the heat-resistant layer is at least 0.5 times the overall basis weight of the porous polyolefin layer.

Further, Patent Document 4 discloses a polyolefin porous membrane comprising a polyethylene resin and having (a) a shutdown temperature of 135°C or lower, (b) a rate of air resistance change of $1 \times 10^4$ sec/100 cc/°C or more, and (c) a transverse shrinkage rate at 130°C of not more than 20%, and discloses that the polyolefin porous membrane has excellent shutdown properties.

Patent Document 5 discloses a battery separator comprising a microporous polyolefin membrane and a modifying porous layer laminated on at least one surface of the microporous polyolefin membrane, wherein the microporous polyolefin membrane comprises a polyethylene resin, and the modifying porous layer is laminated on at least one surface of the microporous polyolefin membrane having (a) a shutdown temperature of 135°C or lower, (b) a rate of air resistance change of $1 \times 10^4$ sec/100 cc/°C or more, and (c) a transverse shrinkage rate at 130°C of 20% or less.

Summary of the Invention

Problems to be Solved by the Invention

In the laminated microporous membranes disclosed in Patent Documents 1 to 3, it is difficult to maintain the properties of a substrate porous membrane because of infiltration of a water-soluble resin into pores of the membrane, and in particular, the problem is deterioration of shutdown properties at low temperatures. Further, in

Patent Document 1, it is intended to maintain the properties of the substrate even in the case where the modifying porous layer comprising a water-soluble resin and particles is laminated on a polyolefin porous membrane, but it is necessary, in applying a slurry, to adjust the contact angle between the slurry and the substrate porous membrane.

On the other hand, the polyolefin microporous membrane disclosed in Patent Document 4 provides a limited improvement in heat resistance and physical strength, and, for example, one possible method is to laminate the modifying porous layer of Patent Documents 1 to 3 on the polyolefin porous membrane of Patent Document 4, but deterioration of shutdown properties cannot be avoided by simple lamination.

In other words, hitherto there has been no laminated polyolefin microporous membrane that is satisfactory in heat resistance and physical strength while utilizing the shutdown properties of a polyolefin microporous membrane.

An object of the present invention is to provide a battery separator comprising a laminated polyolefin microporous membrane composed of a polyolefin microporous membrane and a modifying porous layer having adhesion to the polyolefin microporous membrane, the polyolefin microporous membrane being provided with physical strength and heat resistance with shutdown properties not being significantly reduced, and a method of producing the battery separator.

Means for Solving the Problems

To solve the problems described above, the battery separator of the present invention has the following constitution:

A battery separator which is a laminated polyolefin microporous membrane, comprising a polyolefin microporous membrane, and a modifying porous layer comprising a water-soluble resin or water-dispersible resin, and fine particles, the modifying porous layer being laminated on at least one surface of the polyolefin microporous membrane, wherein the polyolefin microporous membrane comprises a polyethylene resin and has (a) a shutdown temperature (a temperature at which an air resistance measured while heating the polyolefin microporous membrane at a temperature rise rate of 5°C/min reaches $1 \times 10^5$ sec/100 cc) of 135°C or lower, (b) a rate of air resistance change (a gradient of a curve representing dependency of the air resistance on temperature at an air resistance of $1 \times 10^4$ sec/100 cc) of $1 \times 10^4$ sec/100 cc/°C or more, (c) a transverse shrinkage rate at 130°C (measured by thermomechanical analysis under a load of 2 gf at a temperature rise rate of 5°C/min) of 20% or less, and (d) a thickness of 16 $\mu$m or less, the shutdown temperature difference between the polyolefin microporous membrane and the laminated polyolefin microporous membrane being 4.0°C or less.

In the battery separator of the present invention, the water-soluble resin or water-dispersible resin preferably comprises at least one of carboxymethylcellulose and an acrylic resin.

In the battery separator of the present invention, the fine particles are preferably at least one selected from titanium dioxide, alumina, and boehmite.

In the battery separator of the present invention, the polyethylene resin preferably has a $\Delta Hm_{\leq 125\,°C}$, a cumulative endotherm up to 125°C relative to a heat of crystal melting measured by differential scanning calorimetry at a temperature rise rate of 10°C/min, of not more than 20% and a $T_{50\%}$, a temperature at the time when the endotherm reaches 50% of the heat of crystal melting, of 135°C or lower.

In the battery separator of the present invention, the polyethylene resin preferably comprises a copolymer of ethylene and any other $\alpha$-olefin.

In the battery separator of the present invention, preferably, the polyethylene resin comprises a copolymer of ethylene and any other $\alpha$-olefin, and the copolymer is produced using a single-site catalyst and has a mass average molecular weight of not less than $1 \times 10^4$ but less than $7 \times 10^6$.

To solve the problems described above, the method of producing the battery separator of the present invention has the following constitution:

A method of producing the battery separator according to any one of the above, comprising the steps of:

(a) preparing a polyolefin resin solution by melt-kneading a polyolefin resin comprising a polyethylene resin with a membrane-forming solvent in a twin-screw extruder such that the ratio of a feed rate Q (kg/h) of the polyolefin resin to a screw speed Ns (rpm) (Q/Ns) is 0.1 to 0.55 Kg/h/rpm, the polyethylene resin having a $\Delta Hm_{\leq 125 \, °C}$, a cumulative endotherm up to 125°C relative to a heat of crystal melting measured by differential scanning calorimetry at a temperature rise rate of 10°C/min, of not more than 20% and a $T_{50\%}$, a temperature at the time when the endotherm reaches 50% of the heat of crystal melting, of 135°C or lower;

(b) forming a gel-like sheet by extruding the polyolefin resin solution through a die and cooling the extrudate;

(c) stretching the gel-like sheet at a rate of 1 to 80%/sec relative to 100% of the length before stretching;

(d) removing the membrane-forming solvent to obtain a polyolefin microporous membrane; and

(e) applying a coating solution comprising a water-soluble resin or water-dispersible resin, and fine particles to at least one surface of the polyolefin microporous membrane obtained above, followed by drying, wherein the volume ratio of the water-soluble resin or water-dispersible resin to the fine particles is 2 to 8% and the concentration of the water-soluble resin or water-dispersible resin is 0.8 to 5%.

Effects of the Invention

The present invention provides a laminated polyolefin microporous membrane having excellent shutdown properties, physical strength, and heat resistance as well as adhesion between a polyolefin microporous membrane and a modifying porous layer. "Modifying porous layer" as used herein refers to a layer comprising a resin that provides or improves at least one properties such as heat resistance, adhesion to electrode material, and electrolyte permeability.

Brief Description of the Drawings

FIG. 1 shows a typical example of a melting endotherm curve;

FIG. 2 shows the same melting endotherm curve as in FIG. 1 showing a total endotherm at 125°C;

FIG. 3 shows the same melting endotherm curve as in FIG. 1 showing a $T_{50\%}$, a temperature at the time when the endotherm reaches 50% of a heat of crystal melting;

FIG. 4 shows a typical example of a temperature T/(air resistance p)$^{-1}$ curve for determining a shutdown start temperature; and

FIG. 5 shows a typical example of a temperature T/air resistance p curve for determining a shutdown temperature, a rate of air resistance change, and a meltdown temperature.

Mode for Carrying Out the Invention

In the present invention, by infiltrating in small amounts a water-soluble resin component or water-dispersible resin component constituting a modifying porous layer into pores of a polyolefin microporous membrane excellent in shutdown properties, heat resistance, and rate of air resistance change produced by using a polyolefin resin having specific properties and a highly-controlled membrane-forming technique, increase in shutdown temperature due to infiltration of the water-soluble resin component or water-dispersible resin component in the modifying porous layer into the microporous membrane can be reduced to a low level. Further, by using a modifying porous layer with heat resistance, a synergistic effect with the excellent heat resistance of the polyolefin microporous membrane is produced, providing a battery separator having more excellent heat resistance. The battery separator of the present invention will be described below, but the present invention is, of course, not limited to this description.

The polyolefin microporous membrane used in the present invention (i) is produced from a polyolefin resin comprising a polyethylene resin having a $\Delta Hm_{\leq 125 \, °C}$, a cumulative endotherm up to 125°C relative to a heat of crystal melting measured by differential scanning calorimetry at a given temperature rise rate, of not more than 20% and a $T_{50\%}$, a temperature at the time when the endotherm reaches 50% of the heat of crystal melting, of 135°C or lower, and has excellent heat resistance in a temperature range from a shutdown start temperature to a shutdown temperature and a low shutdown temperature, and (ii) is produced by preparing a polyolefin resin solution by melt-kneading the polyolefin resin comprising the polyethylene resin with a membrane-forming solvent in a twin-screw extruder such that the ratio of a feed rate Q (kg/h) of the polyolefin resin to a screw speed Ns (rpm) (Q/Ns) is 0.1 to 0.55 kg/h/rpm, forming a gel-like sheet by extruding the polyolefin resin solution obtained through a die and cooling the extrudate, and removing the membrane-forming solvent from the gel-like sheet obtained, and has high physical stability before the start of shutdown, a high rate of air resistance change after the start of shutdown, excellent heat resistance in a temperature range from a shutdown start temperature to a shutdown temperature, and a low shutdown temperature. It was discovered that through the use of the above polyolefin microporous membrane, deterioration of shutdown properties of the polyolefin membrane is reduced even if a modifying porous layer with excellent heat resistance is laminated, and an excellent battery separator is produced.

Thus, the polyolefin microporous membrane used in the present invention is characterized by comprising a polyethylene resin and having (a) a shutdown temperature (a temperature at which an air resistance measured while heating the polyolefin microporous membrane at a temperature rise rate of 5°C/min reaches $1 \times 10^5$ sec/100 cc) of 135°C or lower, (b) a rate of air resistance change (a gradient of a curve representing dependency of the air resistance on temperature at an air resistance of $1 \times 10^4$ sec/100 cc) of $1 \times 10^4$ sec/100 cc/°C or more, (c) a transverse shrinkage rate at 130°C (measured by thermomechanical analysis under a load of 2 gf at a temperature rise rate of 5°C/min) of 20% or less, and (d) a thickness of 16 $\mu$m or less, the shutdown temperature difference between the polyolefin microporous membrane and the laminated polyolefin microporous membrane being 4.0°C or less.

The method of producing the polyolefin microporous membrane used in the present invention is characterized by comprising (1) preparing a polyolefin resin solution by melt-kneading a polyolefin resin comprising a polyethylene resin with a membrane-forming solvent in a twin-screw extruder such that the ratio of a feed rate Q (kg/h) of the polyolefin resin to a screw speed Ns (rpm) (Q/Ns) is 0.1 to 0.55 kg/h/rpm, the polyethylene resin having a $\Delta Hm_{\leq 125°C}$, a cumulative endotherm up to 125°C relative to a heat of crystal melting measured by differential scanning calorimetry at a temperature rise rate of 10°C/min, of not more than 20% and a $T_{50\%}$, a temperature at the time when the endotherm reaches 50% of the heat of crystal melting, of 135°C or lower, (2) forming a gel-like sheet by extruding the polyolefin resin solution through a die and cooling the extrudate, (3) stretching the gel-like sheet, (4) and then removing the membrane-forming solvent.

The polyolefin microporous membrane used in the present invention will be described in detail.

[1] Polyolefin Microporous Membrane

The polyolefin resin constituting the polyolefin microporous membrane used in the present invention comprises a polyethylene resin described below.

(1) Heat of Crystal Melting of Polyethylene Resin

For the polyethylene resin used as a raw material in the present invention, the percentage of a cumulative endotherm up to 125°C relative to a heat of crystal melting $\Delta Hm$ measured by differential scanning calorimetry (DSC) at a temperature rise rate of 10°C/min (hereinafter referred to as $\Delta Hm_{\leq 125°C}$) is preferably not more than 20%, and the temperature at the time when the endotherm reaches 50% of the heat of crystal melting $\Delta Hm$ (hereinafter referred to as $T_{50\%}$) is preferably 135°C or lower.

$\Delta Hm_{\leq 125°C}$ is a parameter affected by molecular weight, degree of branching, and degree of molecular entanglement of polyethylene. A $\Delta Hm_{\leq 125°C}$ of not more than 20% leads to a low shutdown temperature, which provides excellent heat resistance in a temperature range from a shutdown start temperature to a shutdown temperature. $\Delta Hm_{\leq 125°C}$ is more preferably 17% or less.

$T_{50}\%$ is a parameter affected by configuration of primary structures (e.g., molecular weight, molecular weight distribution, degree of branching, molecular weight of branched chains, distribution of branching points, and percentage of copolymers) and higher-order structures (e.g., crystal size, crystal distribution, and crystal lattice regularity) of polyethylene [homopolymer or ethylene/$\alpha$-olefin copolymer (the same applies hereinafter)], and is an indicator of shutdown temperature and the rate of air resistance change after the start of shutdown. When $T_{50\%}$ is 135°C or lower, the polyolefin microporous membrane, when used as a battery separator, exhibits low and good shutdown properties and an excellent shutdown response at overheating.

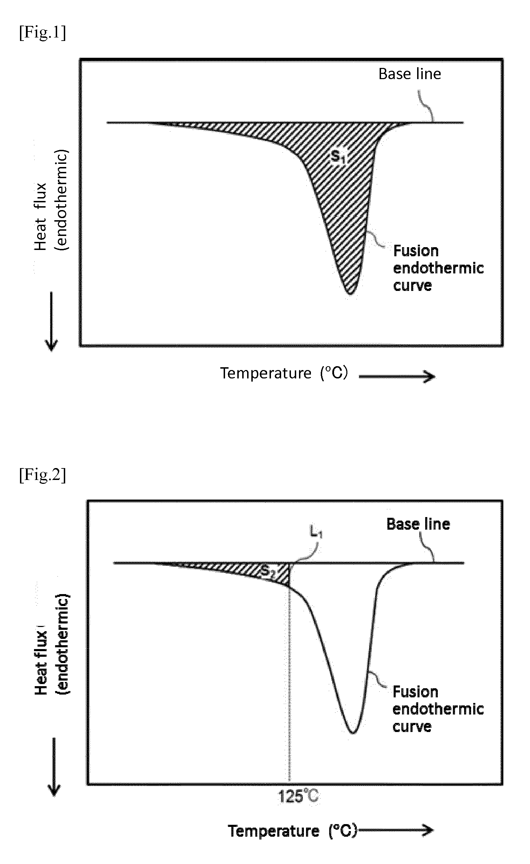

The heat of crystal melting $\Delta Hm$ (J/g) of the polyethylene resin is determined by the following procedure in accordance with JIS K 7122. First, a polyethylene resin sample (a molded product obtained by melt-pressing at 210°C (thickness: 0.5 mm)) is placed in a sample holder of a differential scanning calorimeter (Pyris Diamond DSC available from Perkin Elmer, Inc.), heat-treated at 230°C for 1 minute in a nitrogen atmosphere, cooled to 30°C at 10°C/min, kept at 30°C for 1 minute, and heated to 230°C at a speed of 10°C/min. As shown in FIG. 1, an endotherm (J) is calculated from an area $S_1$ of the region (shown by hatching) enclosed by a DSC curve (melting endotherm curve) obtained through temperature rising and a baseline, and the endotherm is divided by the weight (g) of the sample to thereby determine a heat of crystal melting $\Delta Hm$. $\Delta Hm_{\leq 125°C}$ (J/g), as shown in FIG. 2, is a percentage (area %) of an area $S_2$ in the area

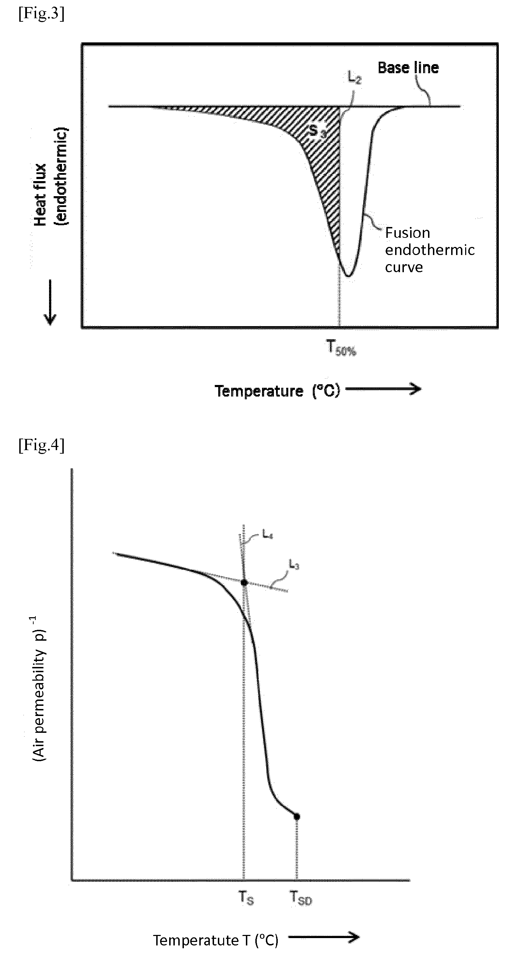

$S_1$, the $S_2$ being an area of the region (shown by hatching) at the lower temperature side of a straight line $L_1$ (at 125°C) perpendicular to the baseline. $T_{50\%}$, as shown in FIG. 3, is a temperature at which an area $S_3$ (the area of the region (shown by hatching) at the lower temperature side of a straight line $L_2$ perpendicular to the baseline) reaches 50% of the area $S_1$.

(2) Components of Polyethylene Resin

The polyethylene resin may be a single substance or a composition of two or more polyethylenes as long as its $\Delta Hm_{\leq 125°C}$ and $T_{50\%}$ are within the above ranges. The polyethylene resin is preferably (a) an ultra-high molecular weight polyethylene, (b) a polyethylene other than ultra-high molecular weight polyethylenes, or (c) a mixture of an ultra-high molecular weight polyethylene with a polyethylene other than ultra-high molecular weight polyethylenes (polyethylene composition). In every case, the mass average molecular weight (Mw) of the polyethylene resin, though not critical, is preferably $1 \times 10^4$ to $1 \times 10^7$, more preferably $5 \times 10^4$ to $15 \times 10^6$, and particularly preferably $1 \times 10^5$ to $5 \times 10^6$.

(a) Ultra-High Molecular Weight Polyethylene

The ultra-high molecular weight polyethylene has a Mw of $7 \times 10^5$ or more. The ultra-high molecular weight polyethylene may be not only an ethylene homopolymer but also an ethylene/$\alpha$-olefincopolymer containing a small amount of other $\alpha$-olefins. Preferred examples of $\alpha$-olefins other than ethylene include propylene, butene-1, pentene-1, hexene-1, 4-methylpentene-1, octene-1, vinyl acetate, methyl methacrylate, and styrene. The Mw of the ultra-high molecular weight polyethylene is preferably $1 \times 10^6$ to $15 \times 10^6$, more preferably $1 \times 10^6$ to $5 \times 10^6$.

(b) Polyethylene Other Than Ultra-High Molecular Weight Polyethylenes

The polyethylene other than ultra-high molecular weight polyethylenes has a Mw of not less than $1 \times 10^4$ but less than $7 \times 10^5$. At least one selected from the group consisting of high density polyethylene, medium density polyethylene, branched low density polyethylene, and linear low density polyethylene is preferred, and high density polyethylene is more preferred. The polyethylene having a Mw of not less than $1 \times 10^4$ but less than $7 \times 10^5$ may be not only an ethylene homopolymer but also a copolymer containing a small amount of other $\alpha$-olefins such as propylene, butene-1, and hexene-1. Such a copolymer is preferably produced using a single-site catalyst. The polyethylene other than ultra-high molecular weight polyethylenes is not limited to a single substance and may be a mixture of two or more polyethylenes other than ultra-high molecular weight polyethylenes.

(c) Polyethylene Composition

The case where a polyethylene composition is used as the polyethylene resin will be described. The polyethylene composition is a mixture of an ultra-high molecular weight polyethylene with a Mw of $7 \times 10^5$ or more and a polyethylene other than ultra-high molecular weight polyethylenes with a Mw of not less than $1 \times 10^4$ but less than $7 \times 10^5$. The ultra-high molecular weight polyethylene and the polyethylene other than ultra-high molecular weight polyethylenes may be the same as described above. The molecular weight distribution (mass average molecular weight/number average molecular weight (Mw/Mn)) of this polyethylene composition can be easily controlled depending on the intended use. The polyethylene composition is preferably a composition of the above ultra-high molecular weight polyethylene and a high density polyethylene. The Mw of the high density polyethylene used in the polyethylene composition is preferably not less than $1 \times 10^5$ but less than $7 \times 10^5$, more preferably $1 \times 10^5$ to $5 \times 10^5$, and most preferably $2 \times 10^5$ to $4 \times 10^5$. The content of the ultra-high molecular weight polyethylene in the polyethylene composition is preferably 1% by mass or more based on 100% by mass of the total polyethylene composition, more preferably 2 to 50% by mass. The molecular weight distribution (mass average molecular weight/number average molecular weight (Mw/Mn)) of the polyethylene composition can be easily controlled depending on the intended use.

(d) Molecular Weight Distribution Mw/Mn

Mw/Mn is a measure of molecular weight distribution, and larger values indicate wider molecular weight distributions. The Mw/Mn of the polyethylene resin is not critical, but in every case where the polyethylene resin is one of the (a) to (c) above, it is preferably 5 to 300, more preferably 10 to 100.

The polyethylene resins as described above may be a commercially available product. Examples of the commercially available product include Nipolon Hard (registered trademark) 6100A, 7300A, and 5110A (all available from Tosoh Corporation), and HI-ZEX (registered trademark) 640UF and 780UF (all available from Prime Polymer Co., Ltd.).

(3) Other Addable Resins

The polyethylene resin may be a composition comprising a polyolefin other than polyethylene resins or a resin other than polyolefins as long as the effects of the present invention are not compromised. Therefore, it should be understood that the term "polyethylene resin" includes not only polyethylene but also resins other than polyethylene. The polyolefin other than polyethylene resins can be at least one selected from the group consisting of polypropylene, polybutene-1, polypentene-1, polyhexene-1, poly-4-methylpentene-1, polyoctene-1, polyvinyl acetate, polymethyl methacrylate, polystyrene, and ethylene/$\alpha$-olefincopolymer, each having a Mw of $1 \times 10^4$ to $4 \times 10^6$, and a polyethylene wax having a Mw of $1 \times 10^3$ to $1 \times 10^4$. Polypropylene, polybutene-1, polypentene-1, polyhexene-1, poly-4-methylpentene-1, polyoctene-1, polyvinyl acetate, polymethyl methacrylate, and polystyrene maybe not only a homopolymer but also a copolymer containing other $\alpha$-olefins.

Examples of the resin other than polyethylene resins include heat resistant resins having a melting point or a glass transition temperature (Tg) of 150°C or higher. The heat resistant resin is preferably a crystalline resin (including partially crystalline resins) having a melting point of 150°C or higher and an amorphous resin having a Tg of 150°C or higher. The melting point and Tg can be measured according to JIS K 7121, and so on.

[2] Method of Producing Polyolefin Microporous Membrane

The method of producing the polyolefin microporous membrane used in the present invention comprises the steps of (1) preparing a polyolefin resin solution by melt-kneading the above polyolefin resin and a membrane-forming solvent, (2) extruding the polyolefin resin solution through a die, (3) forming a gel-like sheet by cooling the extrudate, (4) stretching, (5) removing the membrane-forming solvent, and (6) drying. In other words, it is a production process what is called Wet process. Between the steps (5) and (6), any of (7) hot roll treatment, (8) hot solvent treatment, and (9) heat-setting may be optionally conducted. Furthermore, after the step (6), (10) stretching a microporous membrane, (11) heat treatment, (12) cross-linking with ionizing radiation, (13) hydrophilization, and the like can be conducted.

(1) Preparing Polyolefin Resin Solution

The polyolefin resin solution is prepared by adding an appropriate membrane-forming solvent to the polyolefin resin mentioned above and then melt-kneading the resulting mixture. To the polyolefin resin solution, the various additives described above such as inorganic fillers, antioxidants, UV absorbers, antiblocking agents, pigments, and dyes can be optionally added as long as the effects of the present invention are not compromised. For example, fine silicate powder can be added as a pore-forming agent.

The membrane-forming solvent can be a liquid solvent or a solid solvent. Examples of liquid solvents include aliphatic or cyclic hydrocarbons such as nonane, decane, decalin, paraxylene, undecane, dodecane, and liquid paraffin; and mineral oil distillates having a boiling point equivalent to those of these hydrocarbons. To obtain a gel-like sheet with a stable solvent content, it is preferable to use a nonvolatile liquid solvent such as liquid paraffin. The solid solvent preferably has a melting point of 80°C or lower, and examples of such solid solvents include paraffin wax, ceryl alcohol, stearyl alcohol, and dicyclohexyl phthalate. The liquid solvent and the solid solvent may be used in combination.

The viscosity of the liquid solvent is preferably 30 to 500 cSt at 25°C, more preferably 30 to 200 cSt.

The melt-kneading method, though not critical, is preferably uniform kneading in an extruder. This method is suitable for preparing a high-concentration polyethylene resin solution. The melt-blending temperature is generally from (the melting point Tm of the polyethylene resin + 10°C) to (Tm + 110°C) though it may be properly set depending on the components of the polyolefin resin. In cases where the polyethylene resin is (a) an ultra-high molecular weight polyethylene, (b) a polyethylene other than ultra-high molecular weight polyethylenes, or (c) a polyethylene composition, the melting point Tm of the polyethylene resin is a melting point of them. In the case of a polyethylene composition comprising a polyolefin other than polyethylene resins or a heat resistant resin, the melting point Tm of the polyethylene resin is a melting point of an ultra-high molecular weight polyethylene, a polyethylene other than ultra-high molecular weight polyethylenes, or a polyethylene composition contained in the above composition, and so on.

The extruder is preferably a twin-screw extruder. The twin-screw extruder may be an intermeshing co-rotating twin-screw extruder, an intermeshing counter-rotating twin-screw extruder, a non-intermeshing co-rotating twin-screw extruder, or a non-intermeshing counter-rotating twin-screw extruder. The intermeshing co-rotating twin-screw extruder is preferred because it has a self-cleaning function and can achieve a higher rotation speed with a smaller load than those of counter-rotating twin-screw extruders.

In the method of producing the battery separator of the present invention, when introducing the polyethylene resin into the twin-screw extruder, the ratio of a feed rate Q of the polyethylene resin (kg/h) to a screw speed Ns (rpm) (Q/Ns) is 0.1 to 0.55 kg/h/rpm. If Q/Ns is less than 0.1 kg/h/rpm, the polyolefin resin will experience excessive shear failure, resulting in a low meltdown temperature, which leads to poor rupture resistance during the temperature rising after shutdown. If Q/Ns is more than 0.55 kg/h/rpm, uniform kneading cannot be achieved. Q/Ns is more preferably 0.2 to 0.5 kg/h/rpm. The screw speed Ns is more preferably 250 rpm or more. The upper limit of the screw speed Ns, though not critical, is preferably 500 rpm.

The concentration of the polyethylene resin is preferably 10 to 50% by mass based on 100% by mass of the total of the polyethylene resin and the membrane-forming solvent, more preferably 20 to 45% by mass.

(2) Extruding

The melt-kneaded polyethylene resin solution is extruded from an extruder through a die directly or after being pelletized. When using a sheet-forming die having a rectangular orifice, the die typically has a gap of 0.1 to 5 mm and is heated to 140 to 250°C during extrusion. The extrusion speed of the heated solution is preferably 0.2 to 15 m/min.

(3) Forming Gel-Like Sheet

A gel-like sheet is formed by cooling the extrudate from the die. The cooling is preferably conducted at least to a gelation temperature at a speed of 50°C/min or higher. Such cooling fixes a structure in which the polyethylene resin is microphase-separated by the membrane-forming solvent (a gel structure comprising a polyethylene resin phase and a membrane-forming solvent phase). The cooling is preferably conducted to 25°C or lower.

The cooling roll temperature is preferably from (the crystallization temperature Tc of the polyethylene resin - 120°C) to (Tc - 5°C), more preferably from (Tc - 115°C) to (Tc - 15°C). A cooling roll temperature in this preferred range enables sufficiently rapid cooling. In cases where the polyethylene resin is (a) the ultra-high molecular weight polyethylene, (b) the polyethylene other than ultra-high molecular weight polyethylenes, or (c) the polyethylene composition described above, the crystallization temperature Tc of the polyolefin resin is a crystallization temperature of them. In cases where the polyolefin resin is a composition comprising a polyolefin other than polyethylene or a heat resistant resin, the crystallization temperature Tc of the polyolefin resin is a crystallization temperature of an ultra-high molecular weight polyethylene, a polyethylene other than ultra-high molecular weight polyethylenes, or a polyethylene composition contained in the above composition, and so on. "Crystallization temperature" herein refers to a value determined according to JIS K 7121. The ultra-high molecular weight polyethylene, the polyethylene other than ultra-high molecular weight polyethylenes, and the polyethylene composition generally have a crystallization temperature of 110 to 115°C. Accordingly, the cooling roll temperature is set in the range of -10 to 105°C, preferably in the range of -5°C to 95°C. The contact time of the cooling roll and the sheet is preferably 1 to 30 seconds, more preferably 2 to 15 seconds.

(4) Stretching

The gel-like sheet before washing is preferably stretched in at least one direction. After heating, the gel-like sheet is preferably stretched to a predetermined magnification by a tenter method or a roll method. The gel-like sheet can be uniformly stretched because it contains a membrane-forming solvent. The stretching improves mechanical strength and expands pores, which is particularly preferred in the use as a battery separator. Although the stretching may be monoaxial stretching or biaxial stretching, the biaxial stretching is preferred. The biaxial stretching may be simultaneous biaxial stretching, sequential stretching, or multi-stage stretching (e.g., a combination of simultaneous biaxial stretching and sequential stretching), but the simultaneous biaxial stretching is particularly preferred.

The stretching magnification, in the case of monoaxial stretching, is preferably 2X or more, more preferably 3 to 30X. In the case of biaxial stretching, it is preferably at least 3X in both directions, i.e., 9X or more in area magnification.

The stretching temperature is preferably not higher than the melting point Tm of the polyolefin resin + 10°C, more preferably in the range of not lower than the crystal dispersion temperature Tcd described above but lower than the melting point Tm described above. When the stretching temperature is in this preferred range, the polyethylene resin does not melt, and molecular chains can be sufficiently oriented as a result of stretching; furthermore, the polyethylene resin softens so sufficiently that the membrane is less likely to be broken by stretching, which enables a stretching at a high magnification. "Crystal dispersion temperature" herein refers to a value determined by measuring temperature characteristics of dynamic viscoelasticity in accordance with ASTM D4065. The ultra-high molecular weight polyethylene, the polyethylene other than ultra-high molecular weight polyethylenes, and the polyethylene composition described above have a crystal dispersion temperature of about 90 to 100°C, and accordingly, the stretching temperature is preferably in the range of 90 to 140°C, more preferably in the range of 100 to 130°C.

In the method of producing the battery separator of the present invention, the stretching speed is 1 to 80%/sec. In the case of monoaxial stretching, it is 1 to 80%/sec in the longitudinal direction (MD) or the transverse direction (TD). In the case of biaxial stretching, it is 1 to 80%/sec in both MD and TD. The stretching speed (%/sec) of the gel-like sheet is expressed as a percentage relative to 100% of the length before stretching. A stretching speed of less than 1 %/sec results in unstable stretching. A stretching speed of more than 80%/sec leads to reduced heat resistance. The stretching speed is more preferably 2 to 70%/sec. In the case of biaxial stretching, the stretching speeds in MD and TD may be the same or different as long as they are 1 to 80%/sec, though they are preferably the same.

The stretching described above causes cleavage between polyethylene crystal lamellas, and the polyethylene phase (ultra-high molecular weight polyethylene, polyethylene other than ultra-high molecular weight polyethylenes, or polyethylene composition) becomes finer, forming large numbers of fibrils. The resulting fibrils form a three-dimensional network structure (three-dimensionally and irregularly connected network structure).

Depending on the desired physical properties, stretching can be conducted with a temperature distribution in the membrane thickness direction, whereby a microporous membrane with more excellent mechanical strength is provided. A method therefor is described specifically in Japanese Patent No. 3347854.

(5) Removing Membrane-Forming Solvent

A washing solvent is used to remove the membrane-forming solvent. Since the polyethylene resin phase in the gel-like sheet is separated from the membrane-forming solvent phase, removing the membrane-forming solvent provides a microporous membrane. The removal of the membrane-forming solvent can be conducted using a known washing solvent. Examples of washing solvents include volatile solvents, such as saturated hydrocarbons such as pentane, hexane, and heptane; chlorinated hydrocarbons such as methylene chloride and carbon tetrachloride; ethers such as diethyl ether and dioxane; ketones such as methyl ethyl ketone; linear fluorocarbons such as trifluoroethane, $C_6F_{14}$, and $C_7F_{16}$; cyclic hydrofluorocarbons such as $C_5H_3F_7$; hydrofluoroethers such as $C_4F_9OCH_3$ and $C_4F_9OC_2H_5$; and perfluoroethers such as $C_4F_9OCF_3$ and $C_4F_9OC_2F_5$. These washing solvents have a low surface tension (e.g., 24 mN/m or less at 25°C). Using a washing solvent having a low surface tension prevents a micropore-forming network structure from shrinking because of a surface tension at gas-liquid interfaces during drying after washing, thereby providing a microporous membrane having a high porosity and high permeability.

Membrane washing can be conducted by immersion in a washing solvent, showering a washing solvent, or the combination thereof. The washing solvent is preferably used in an amount of 300 to 30,000 parts by mass based on 100 parts by mass of the membrane before washing. Washing with a washing solvent is preferably conducted until the amount of the remaining membrane-forming solvent is reduced to less than 1% by mass of the amount initially added.

(6) Drying Membrane

The polyolefin microporous membrane obtained by washing is dried, for example, by heat-drying or air-drying to completely remove the solvent.

The drying temperature is preferably equal to or lower than the crystal dispersion temperature Tcd of the polyolefin resin, particularly preferably 5°C or more lower than the Tcd. As described above, the polyethylene resin has a crystal dispersion temperature of about 90 to 100°C.

The drying is preferably conducted until the amount of the remaining washing solvent is reduced to 5% by mass or less based on 100% by mass of the microporous membrane (dry weight), more preferably to 3% by mass or less. If the drying is insufficient, the porosity of the microporous membrane is reduced when heat treatment is conducted subsequently, resulting in poor permeability, which is not preferred.

(7) Hot Roll Treatment

At least one surface of the gel-like sheet may be brought into contact with a heat roll, whereby the compression resistance of the microporous membrane is improved. A specific method therefor is described, for example, in JP 2006-248582 A.

(8) Hot Solvent Treatment

The gel-like sheet may be brought into contact with a hot solvent, whereby a microporous membrane with more excellent mechanical strength and permeability is provided. A method therefor is described specifically in WO 2000/20493.

(9) Heat-Setting

The stretched gel-like sheet may be heat-set. A specific method therefor is described, for example, in JP 2002-256099 A.

(10) Stretching Microporous Membrane

The dried polyolefin microporous membrane may be stretched in at least one direction as long as the effects of the present invention are not compromised. This stretching can be conducted while heating the membrane by a tenter method or the like similarly to the above.

The temperature for stretching the microporous membrane is preferably not higher than the melting point Tm of the polyethylene resin, more preferably in the range of the Tcd to the Tm described above. Specifically, it is in the range of 90 to 135°C, and preferably in the range of 95 to 130°C. In the case of biaxial stretching, the magnification is preferably 1.1 to 2.5X in at least one direction, more preferably 1.1 to 2.0X.

(11) Heat Treatment

The dried membrane is preferably heat-set and/or relaxed by a known method. The heat-setting or relaxing may be properly selected depending on the physical properties the polyolefin microporous membrane requires. The heat treatment stabilizes crystals and makes lamellas uniform. It is particularly preferable to relax the microporous membrane after stretching once.

(12) Cross-Linking Membrane

The dried polyolefin microporous membrane may be cross-linked by irradiation with ionizing radiation such as alpha-rays, beta-rays, gamma-rays, or electron beams. In the case of irradiation with electron beams, the electron dose of 0.1 to 100 Mrad is preferred, and the accelerating voltage of 100 to 300 kV is preferred. The cross-linking increases the meltdown temperature of the microporous membrane.

(13) Hydrophilization

The dried polyolefin microporous membrane may be hydrophilized by monomer-grafting treatment, surfactant treatment, corona-discharging treatment, plasma treatment, or the like using a known method.

According to this process, a polyolefin microporous membrane is provided having high physical stability before the start of shutdown, a high rate of air resistance change after the start of shutdown, which is an indicator of shutdown speed, excellent heat resistance in a temperature range from a shutdown start temperature to a shutdown temperature, and a low shutdown temperature.

[3] Modifying Porous Layer

The modifying porous layer in the present invention will now be described. It is important for the modifying porous layer in the present invention to contain a water-soluble resin or water-dispersible resin, and fine particles. Using a water-soluble resin or water-dispersible resin and fine particles not only provides excellent heat resistance but also leads to reduced cost, and, further, is preferred also from the standpoint of environmental load during a production process.

Specific examples of the water-soluble resin or water-dispersible resin include CMC, polyvinyl alcohol, and acrylic resins such as polyacrylic acid, polyacrylamide, and polymethacrylic acid, and CMC and acrylic resins are most preferred. The acrylic resin may be a commercially available acrylic emulsion, and specific examples thereof include "ACRYSET" (registered trademark) TF-300 (available from Nippon Shokubai Co., Ltd.) and "Polysol" (registered trademark) AP-4735 (available from Showa Denko K.K.).

The modifying porous layer can comprise various additives such as surfactants and antistatic agents as components other than the water-soluble resin or water-dispersible resin as long as the object of the present invention can be achieved.

The fine particles are preferably inorganic particles. Examples of inorganic particles include calcium carbonate, calcium phosphate, amorphous silica, crystalline glass filler, kaolin, talc, titanium dioxide, alumina, silica-alumina composite oxide particles, barium sulfate, calcium fluoride, lithium fluoride, zeolite, molybdenum sulfide, mica, and boehmite. Of these, titanium dioxide, alumina, and boehmite are suitable because they are available at low cost.

The average diameter of the fine particles is preferably 1.5 times to 50 times the average pore diameter of the polyolefin microporous membrane, more preferably 2.0 times to 20 times. When the average diameter of the particles is in this preferred range, a significant increase in air resistance due to blocking of the pores of the polyolefin microporous membrane is prevented, and also serious defects in a battery due to falling off of the particles during a battery assembly process can be prevented effectively. The shape of the particles may be spherical, substantially spherical, plate-like, or needle-like, but is not limited thereto.

In the production method of the present invention, through the process of applying a solution containing a water-soluble resin or water-dispersible resin, fine particles, and a solvent (hereinafter also referred to as "coating solution") to a polyolefin microporous membrane and removing the solvent by drying or the like, the membrane comprising the water-soluble resin or water-dispersible resin, and the fine particles, when the coating solution applied is dried, forms voids around the fine particles to become a porous membrane. If the solution containing a water-soluble resin does not contain fine particles, a porous membrane may not be formed.

To maintain the shutdown properties of the polyolefin microporous membrane, the upper limit of the volume percentage of the water-soluble resin or water-dispersible resin relative to the solid component of the modifying porous layer is 8%, preferably 7%, and the lower limit of the volume percentage is 2%, preferably 3%. When the volume percentage of the water-soluble resin or water-dispersible resin relative to the solid component of the modifying porous layer is more than 8%, there is a problem of deterioration of shutdown properties, and when the volume percentage is less than 2%, there is a problem of the modifying porous layer having reduced membrane strength and being easily peeled off.

However, sufficient adhesion between the polyolefin microporous membrane and the modifying porous layer may not be provided only by adjusting the volume percentage of the resin relative to the solid component of the modifying porous layer to be in the range described above. Thus, in the present invention, the upper limit of the resin concentration in the coating solution described above is 5.0% by weight, preferably 2% by weight, and the lower limit is 0.8% by weight, preferably 1.5% by weight. When the resin concentration is more than 5.0% by weight, there is a problem of air resistance being likely to be low, and when the resin concentration is less than 0.8% by weight, there is a problem of reduction in adhesion between the modifying porous layer and the polyolefin membrane.

In the present invention, the term "solvent" includes not only liquids that dissolve water-soluble resin or water-dispersible resin but also, in a broad sense, dispersion media used to disperse water-soluble resin or water-dispersible resin into particles. The solvent in the present invention is mainly water. In the present invention, it is preferable to use ion-exchanged water or distilled water. The solvent may be water alone, and a water-soluble organic solvent such as alcohols can be optionally used in combination. The use of a water-soluble organic solvent improves the drying speed and coating properties. A preferred water-soluble organic solvent is a mixed solution containing an alcohol such as ethanol, isopropyl alcohol, or benzyl alcohol in an amount in the range of 0.1 to 10% by mass based on the total coating solution. In addition, an organic solvent other than alcohols can be added in an amount less than 1% by mass to the extent that it can be dissolved. However, the total amount of the alcohol and the other organic solvent is preferably less than 10% by mass of the coating solution. Furthermore, components other than the fine particles and the water-soluble resin or water-dispersible resin can be optionally added as long as the object of the present invention can be achieved. Examples of such components include dispersants and pH adjusters.

The thickness of the modifying porous layer is preferably 1 to 5 $\mu$m, more preferably 1 to 4 $\mu$m, and most preferably 1 to 3 $\mu$m. When the thickness of the modifying porous layer is in this preferred range, sufficient adhesion to electrodes is provided, and the membrane strength and insulation properties of the polyolefin microporous membrane can be ensured when it melts and shrinks at or higher than its melting point; a sufficient pore-blocking function is provided, and an abnormal reaction can be prevented; the size when taken up will not be too large, which is suitable for the increase in battery capacity which is expected to progress in the future; and curling is unlikely to increase, which contributes to improved productivity in a battery assembly process.

The porosity of the modifying porous layer is preferably 30 to 90%, more preferably 40 to 70%. When the porosity of the modifying porous layer is in this preferred range, the laminated polyolefin microporous membrane (battery separator) obtained by laminating the modifying porous layer has low electrical resistance, which makes it easy to apply a high current, and the membrane strength is maintained.

The upper limit of the total thickness of the laminated polyolefin microporous membrane obtained by laminating the modifying porous layer is preferably 35 $\mu$m, more preferably 20 $\mu$m. The lower limit is preferably not lower than 6 $\mu$m, more preferably not lower than 9 $\mu$m. When the total thickness of the laminated polyolefin microporous membrane is in this preferred range, a mechanical strength and insulation properties sufficient for a battery separator can be ensured, and in addition, the area of electrodes that can be loaded into a container can be prevented from decreasing, which results in avoidance of decrease in capacity.

[4] Method of Laminating Modifying Porous Layer

The modifying porous layer is preferably laminated by applying the coating solution mentioned above to the polyolefin microporous membrane. Examples of the method of applying the coating solution include reverse roll coating, gravure coating, kiss coating, roll brushing, spray coating, air knife coating, meyer bar coating, pipe doctor method, blade coating, and die coating, and these methods can be used alone or in combination. In this case, it is preferable to apply the coating solution to the lower surface of the polyolefin microporous membrane being conveyed horizontally. As a result of applying to the lower surface, resin components which have a relatively low specific gravity tends to be located at the interface with the polyolefin microporous membrane, which facilitates adhesion.

The solvent is typically removed by drying. The solvent in the coating can also be removed by, before drying, immersing a laminated product obtained by coating the polyolefin microporous membrane with the coating solution in a liquid of greater volatility than water that does not dissolve the water-soluble resin or water-dispersible resin, and replacing the liquid with the solvent. When the coating solution is applied to the upper surface of the polyolefin microporous membrane, the drying temperature is preferably a temperature which does not decrease air permeability; specifically, it is 100°C or lower, preferably 90°C or lower, and more preferably 80°C or lower. Examples of the liquid of greater volatility than water include alcohols such as ethanol, isopropyl alcohol, and benzyl alcohol.

The battery separator of the present invention is desirably stored dry, but when it is difficult to store it absolutely dry, it is preferable to perform a vacuum drying treatment at 100°C or lower immediately before use.

The battery separator of the present invention can be used as a separator for batteries such as secondary batteries such as nickel-hydrogen batteries, nickelcadmium batteries, nickel-zinc batteries, silver-zinc batteries, lithium ion secondary batteries, and lithium polymer secondary batteries, and is preferably used particularly as a separator for lithium ion secondary batteries.

[5] Physical Properties of Polyolefin Microporous Membrane

The polyolefin microporous membrane used as a substrate of the laminated polyolefin microporous membrane of the present invention has the following physical properties.

(1) Shutdown Temperature

The shutdown temperature of the polyolefin microporous membrane used in the present invention is 135°C or lower. If it is higher than 135°C, when the modifying porous layer is laminated on the polyolefin microporous membrane, the resulting battery separator may have a low shutdown response at overheating.

(2) Rate of Air Resistance Change (Indicator of Shutdown Speed)

The rate of air resistance change after the start of shutdown of the polyolefin microporous membrane used in the present invention is $1 \times 10^4$ sec/100 cc/°C or more, preferably $1.2 \times 10^4$ sec/100 cc/°C or more. If the rate of air resistance change is less than $1 \times 10^4$ sec/100 cc/°C, when the modifying porous layer is laminated on the polyolefin microporous membrane, the resulting battery separator has a high shutdown temperature.

(3) Shrinkage Rate at 130°C

The transverse shrinkage rate at 130°C (measured by thermomechanical analysis under a load of 2 gf at a temperature rise rate of 5°C/min) of the polyolefin microporous membrane used in the present invention is 20% or less. If it is more than 20%, when the modifying porous layer is laminated on the polyolefin microporous membrane, the resulting battery separator has significantly reduced heat resistance. This heat shrinkage rate is preferably 17% or less.

(4) Thickness of Polyolefin Microporous Membrane

The thickness of the polyolefin microporous membrane used as a substrate of the laminated polyolefin microporous membrane of the present invention is 16 $\mu$m or less. The upper limit is preferably 12 $\mu$m, more preferably 10 $\mu$m. The lower limit of the thickness of the polyolefin microporous membrane is preferably 5 $\mu$m, more preferably 6 $\mu$m. If the thickness of the polyolefin microporous membrane is more than 16 $\mu$m, the area per unit volume of a battery case is significantly restricted, which is not suitable for the increase in the capacity of a battery which is expected to progress in the future. When the lower limit of the thickness of the polyolefin microporous membrane is in this preferred range, it is easy to provide a membrane strength and pore-blocking function of practical use.

(5) Air Resistance

The upper limit of the air resistance of the polyolefin microporous membrane used in the present invention is preferably 400 sec/100 cc Air, more preferably 350 sec/100 cc Air, and still more preferably 150 sec/100 cc Air. The lower limit is preferably 50 sec/100 cc Air, more preferably 70 sec/100 cc Air, and still more preferably 100 sec/100 cc Air. When the air resistance of the polyolefin microporous membrane is in this preferred range, functions of a battery can be fully exerted since the battery is provided with sufficient charge and discharge properties, in particular, sufficient ion permeability (charge and discharge operating voltage) and lifetime (closely related to the amount of electrolytic solution retained), and in addition, a sufficient mechanical strength and insulation properties are provided, which eliminates the possibility of a short circuit during charge and discharge.

(6) Porosity

For the porosity of the polyolefin microporous membrane used in the present invention, the upper limit is preferably 70%, more preferably 60%, and still more preferably 55%. The lower limit is preferably 30%, more preferably 35%, and still more preferably 40%.

When the porosity of the polyolefin microporous membrane is in this preferred range, functions of a battery can be fully exerted since the battery is provided with sufficient charge and discharge properties, in particular, sufficient ion permeability (charge and discharge operating voltage) and lifetime (closely related to the amount of electrolytic solution retained), and in addition, a sufficient mechanical strength and insulation properties are provided, which eliminates the possibility of a short circuit during charge and discharge.

(7) Tensile Rupture Strength

The tensile rupture strength of the polyolefin microporous membrane used in the present invention is preferably 80,000 kPa or more in both MD and TD. When it is 80,000 kPa or more, the membrane will not rupture when used as a battery separator. The tensile rupture strength is more preferably 100,000 kPa or more.

(8) Tensile Rupture Elongation

The tensile rupture elongation of the polyolefin microporous membrane used in the present invention is preferably 100% or more in both MD and TD. When the tensile rupture elongation is 100% or more, the membrane will not rupture when used as a battery separator.

(9) Shutdown Start Temperature

The shutdown start temperature of the polyolefin microporous membrane used in the present invention is preferably 130°C or more. When the shutdown start temperature of the polyolefin microporous membrane is in this preferred range, the polyolefin microporous membrane, when used as a lithium battery separator, shows sufficiently high shutdown response at overheating.

(10) Meltdown Temperature

The meltdown temperature of the polyolefin microporous membrane used in the present invention is preferably 150°C or higher. The meltdown temperature of the laminated polyolefin microporous membrane is preferably 200°C or higher. When the meltdown temperature of the polyolefin microporous membrane and the meltdown temperature of the laminated polyolefin microporous membrane are each in these preferred ranges, good rupture resistance is exhibited during the temperature rising after shutdown.

(11) Average Pore Size

The average pore size of the polyolefin microporous membrane used in the present invention has a great influence on shutdown properties and the like, and therefore is preferably 0.05 to 0.30 $\mu$m, more preferably 0.07 to 0.50 $\mu$m, and still more preferably 0.08 to 0.13 $\mu$m. When the average pore size of the polyolefin microporous membrane is in this preferred range, the water-soluble resin or water-dispersible resin easily infiltrates into the pores of the polyolefin microporous membrane, which provides sufficient adhesion to the modifying porous layer and excellent electrolyte permeability, and in addition, shutdown properties will not be reduced.

[6] Other Physical Properties

(1) Rate of Air Resistance Increase

The rate of air resistance increase of the laminated polyolefin microporous membrane is preferably 135% or less, more preferably 130% or less. The rate of air resistance increase of the laminated polyolefin microporous membrane is a ratio (expressed as a percentage) of the air resistance of the laminated polyolefin microporous membrane to the air resistance of the polyolefin microporous membrane.

(2) Shutdown Temperature Difference

"Shutdown temperature difference" refers to a value obtained by subtracting the shutdown temperature of the polyolefin microporous membrane from the shutdown temperature of the laminated polyolefin microporous membrane. In the present invention, the shutdown temperature difference is 4.0°C or less. The shutdown temperature difference is preferably 3.0°C or less. When the shutdown temperature difference is more than 4.0°C, the shutdown response at overheating of the polyolefin microporous membrane is slow, which may compromise the safety of batteries typified by lithium ion secondary batteries.

(3) Adhesion between Modifying Porous Layer and Polyolefin Microporous Membrane

The adhesion between the modifying porous layer and the polyolefin microporous membrane is preferably 0.8 or more, more preferably 1.0 or more. "Adhesion" as used herein refers to a value measured by the measurement method of (11) Peeling Strength between Modifying Porous Layer and Polyolefin Microporous Membrane described below.

The polyolefin microporous membrane used in the present invention has an excellent balance of shutdown properties, heat resistance in a temperature range from a shutdown start temperature to a shutdown temperature, and meltdown properties, and also is excellent in permeability and mechanical properties. Examples

The present invention will now be described in detail by way of example, but the present invention is not limited to these examples. The measurements in the examples are values determined by the following methods.

(1) Average Thickness

For a polyolefin microporous membrane and a battery separator, the thickness of a 10-cm square sample was measured at 10 randomly selected points with a contact thickness meter, and its average value was used as an average thickness ($\mu$m).

(2) Air Resistance

Using an Oken-type air resistance meter EGO-1T (manufactured by Asahi Seiko Co., Ltd.), samples of a polyolefin microporous membrane and a battery separator were each fixed such that wrinkling did not occur, and an air resistance was measured in accordance with JIS P 8117. The sample was 10-cm square, and measuring points were the center and four corners, five points in total, of the sample; its average value was used as an air resistance p (sec/100 cc Air). When the length of a side of the sample is less than 10 cm, measurements at five points at intervals of 5 cm may be used. The rate of air resistance increase was determined by dividing the air resistance of the battery separator by the air resistance of the polyolefin microporous membrane and expressed as %.

(3) Pin Puncture Strength of Polyolefin Microporous Membrane

A maximum load was measured when a microporous membrane having a thickness $T_1$ ($\mu$m) was pricked with a needle of 1 mm in diameter with a spherical end surface (radius R of curvature: 0.5 mm) at a speed of 2 mm/sec. The measured maximum load $L_a$ was converted to a maximum load $L_b$ at a thickness of 20 $\mu$m by the equation: $L_b = (L_a \times 20)/T_1$, which was used as a pin puncture strength (Mn/20 $\mu$m).

(4) Tensile Rupture Strength and Tensile Rupture Elongation of Polyolefin Microporous Membrane

Measurements were made using a strip test piece with a width of 10 mm according to ASTM D882. (5) Shutdown Temperature $T_{SD}$ of Polyolefin Microporous Membrane and Battery Separator

For a shutdown temperature $T_{SD}$ (°C), the air resistance of a polyolefin microporous membrane was measured using an Oken-type air resistance meter EGO-IT (manufactured by Asahi Seiko Co., Ltd.) while heating the polyolefin microporous membrane at a temperature rise rate of 5 C°/min, and a temperature at which the air resistance reached $1 \times 10^5$ sec/100 cc which is the detection limit was determined, which temperature was used as a shutdown temperature T (°C).

(6) Shutdown Start Temperature $T_S$

The data of the air resistance p (sec/100 cc Air) at a temperature T (°C), which was obtained in the above shutdown temperature measurement, was used to generate a curve (shown in FIG. 4) representing the relation of a reciprocal of the air resistance p to a temperature, and an intersection of an extension $L_3$ of the straight portion from the start of temperature rise (room temperature) to the start of shutdown and an extension $L_4$ of the straight portion from after the start of shutdown until reaching the shutdown temperature $T_{SD}$ (°C) was used as a shutdown start temperature $T_S$ (°C).

(7) Shutdown Speed (Rate of Air Resistance Change)

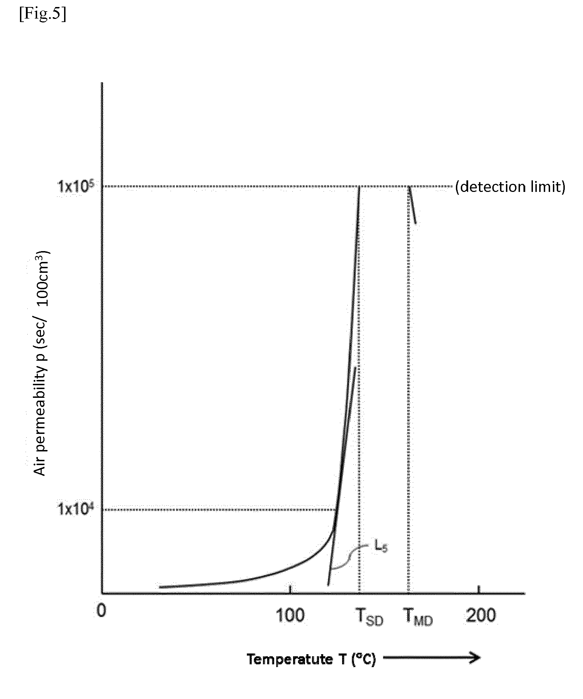

The data of the air resistance p at a temperature T, which was obtained in the above shutdown temperature measurement, was used to generate a temperature-air resistance curve (shown in FIG. 5), and a gradient of the curve ($\Delta p/\Delta T$, inclination of a tangent $L_5$ shown in FIG. 5) at a temperature at which the air resistance reached $1 \times 10^4$ sec/100 cc was determined and used as a rate of air resistance change (8) Shrinkage Rate at 130°C

Using a thermomechanical analyzer TMA/SS6000 (manufactured by Seiko Instruments, Inc.), a test piece of 10 mm (TD) × 3 mm (MD) was heated from room temperature at a speed of 5°C/min while drawing the test piece in the longitudinal direction under a load of 2 g, and a rate of dimensional change from the size at 23°C was measured at 130°C three times. The measurements were averaged to determine a shrinkage rate. (9) Meltdown Temperature $T_{MD}$ of Polyolefin Microporous Membrane and Battery Separator

After the above shutdown temperature $T_{SD}$ was reached, heating was further continued at a temperature rise rate of 5°C/min, and a temperature at which the air resistance became $1 \times 10^5$ sec/100 cc again was determined and used as a meltdown temperature $T_{MD}$ (°C) (see FIG. 5). (10) Heat Resistance of Battery Separator

The heat resistances of a polyolefin microporous membrane and a battery separator were each determined from the average value of the rate of change from the initial size in MD and TD after storage in an oven at 130°C for 60 minutes.

(11) Peeling Strength between Modifying Porous Layer and Polyolefin Microporous Membrane

Adhesive tape No. 405 (available from Nichiban Co., Ltd., 24 mm wide) was applied to a modifying porous layer side of a separator obtained in Examples and Comparative Examples, and the separator was cut to 24 mm in width and 150 mm in length to prepare a test sample. A peeling strength at the interface between the modifying porous layer and a polyolefin microporous membrane was measured by the peeling method (peel rate: 500 mm/min, T-peel) under the conditions of 23°C and 50% RH using a tensile tester "Tensilon" (registered trademark) RTM-100 (manufactured by A & D Company, Limited). Measurements were made over time within 100 mm from the start to the end of the measurements, and an average value of the measurements was calculated and converted to a value per 25 mm width, which was used as a peeling strength. At the peeling interface, the modifying porous layer surface can remain on the polyolefin microporous membrane side, but also in this case, a value was calculated as a peeling strength between the modifying porous layer and the polyolefin microporous membrane.

(12) Rate of Air Resistance Increase

The rate of air resistance increase of a laminated polyolefin microporous membrane is a ratio (expressed as a percentage) of the air resistance of the laminated polyolefin microporous membrane to the air resistance of a polyolefin microporous membrane.

$$\text{Rate of air resistance increase (\%)} = (\text{air resistance of laminated polyolefin}$$

$$\text{microporous membrane/air resistance of laminated polyolefin microporous}$$

$$\text{membrane}) \times 100$$

(13) Shutdown Temperature Difference

The shutdown temperature difference is expressed as a value obtained by subtracting the shutdown temperature of a polyolefin microporous membrane from the shutdown temperature of a laminated polyolefin microporous membrane.

Example 1

<Polyolefin Microporous Membrane>

One hundred parts by mass of a polyethylene (PE) composition comprising 30% by mass of an ultra-high molecular weight polyethylene (UHMWPE) having a mass average molecular weight (Mw) of $2.5 \times 10^6$ and 70% by mass of a high density polyethylene (HDPE) having a Mw of $2.8 \times 10^5$ was dry-blended with 0.375 parts by mass of tetrakis[methylene-3-(3,5-ditertiarybutyl-4-hydroxyphenyl)-propionate]methane to obtain a mixture.

The Mws of UHMWPE and HDPE were determined by gel permeation chromatography (GPC) under the following conditions, and so on.

Measuring apparatus: GPC-150C available from Waters Corporation
Column: "Shodex" (registered trademark) UT806M available from Showa Denko K.K.
Column Temperature: 135°C
Solvent (mobile phase): o-dichlorobenzene
Solvent flow rate: 1.0 mL/min
Sample Concentration: 0.1% by mass (dissolution conditions: 135°C/h) Injection amount: 500 μL
Detector: Differential refractometer available from Waters Corporation
Calibration curve: Generated from a calibration curve of a monodisperse polystyrene standard sample using a predetermined conversion constant.

Twenty-five parts by mass of the mixture obtained was charged into a strong-kneading twin-screw extruder (feed rate Q of the polyethylene composition: 54 kg/h). Seventy-five parts by mass of liquid paraffin was fed to the twin-screw extruder via a side feeder, and melt-blended at a temperature of 210°C while keeping the screw speed Ns at 180 rpm (Q/Ns: 0.3 kg/h/rpm) to prepare a polyethylene solution.

The polyethylene solution obtained was fed from the twin-screw extruder to a T-die, and extruded into a sheet shape. The extrudate was cooled by taking it up around a cooling roll controlled at 50°C to form a gel-like sheet. The gel-like sheet obtained was simultaneously biaxially stretched 5X at a speed of 20%/sec in both MD and TD with a batch-type stretching machine at 116°C. The gel-like sheet was then re-stretched in TD at 127°C at a stretching magnification of 1.4X to obtain a gel-like sheet. This gel-like sheet was fixed to a frame plate (size: 30 cm × 30 cm, made of aluminum) and immersed in a washing bath of methylene chloride controlled at 25°C, and washed while being swayed at 100 rpm for 3 minutes to remove the liquid paraffin. The washed membrane was air-dried at room temperature, fixed to a tenter, and heat-set at 127°C for 10 minutes to produce a polyolefin microporous membrane (a) having a thickness of 9 μm.

<Preparation of Coating Solution>

To 0.8 parts by mass of CMC, product No. 2200, (available from Daicel Finechem Ltd.), 60.8 parts by mass of a solvent was added and stirred for 2 hours. Subsequently, 38.4 parts by mass of alumina fine particles of substantially spherical shape having an average diameter of 0.5 μm were added and stirred for 2 hours to thoroughly disperse the alumina fine particles. The resulting mixture was then microfiltered through a polypropylene felt filter with a filtering particle size (initial filtration efficiency: 95%) of 10 μm to prepare a coating solution (A). At this time, the volume ratio of the resin component to the fine particles was 5:95 (calculated with the specific gravity of CMC as 1.6 g/cm$^3$ and the specific gravity of alumina 4.0 g/cm$^3$).

<Lamination of Modifying Porous Layer>

The coating solution (A) was applied to the lower surface of the polyolefin microporous membrane (a) being conveyed horizontally by gravure coating and dried in a hot-air drying furnace (temperature: 60°C) for 20 seconds to produce a battery separator with a final thickness of 11 μm.

Example 2

<Polyolefin Microporous Membrane>

Similarly to Example 1, the polyolefin microporous membrane (a) was used.

<Preparation of Coating Solution>

To 1.0 parts by mass of CMC, product No. 2200, (available from Daicel Finechem Ltd.), 50.0 parts by mass of a solvent was added and stirred for 2 hours. Subsequently, 49.0 parts by mass of alumina fine particles of substantially spherical shape having an average diameter of 0.5 μm were added and stirred for 2 hours to thoroughly disperse the alumina fine particles. The resulting mixture was then microfiltered through a polypropylene felt filter with a filtering particle size (initial filtration efficiency: 95%) of 10 μm to prepare a coating solution (B). At this time, the volume ratio of the resin component to the fine particles was 5:95.

<Lamination of Modifying Porous Layer>

The coating solution (B) was applied to the polyolefin microporous membrane (a) in the same manner as in Example 1 and dried to produce a battery separator.

Example 3

<Polyolefin Microporous Membrane>

Similarly to Example 1, the polyolefin microporous membrane (a) was used.

<Preparation of Coating Solution>

To 1.2 parts by mass of CMC, product No. 2200, (available from Daicel Finechem Ltd.), 41.2 parts by mass of a solvent was added and stirred for 2 hours. Subsequently, 57.6 parts by mass of alumina fine particles of substantially spherical shape having an average diameter of 0.5 $\mu$m were added and stirred for 2 hours to thoroughly disperse the alumina fine particles. The resulting mixture was then microfiltered through a polypropylene felt filter with a filtering particle size (initial filtration efficiency: 95%) of 10 $\mu$m to prepare a coating solution (C). At this time, the volume ratio of the resin component to the fine particles was 5:95.

<Lamination of Modifying Porous Layer>

The coating solution (C) was applied to the polyolefin microporous membrane (a) in the same manner as in Example 1 and dried to produce a battery separator.

Example 4

<Polyolefin Microporous Membrane>

Similarly to Example 1, the polyolefin microporous membrane (a) was used.

<Preparation of Coating Solution>

To 1.5 parts by mass of CMC, product No. 2200, (available from Daicel Finechem Ltd.), 28.6 parts by mass of a solvent was added and stirred for 2 hours. Subsequently, 70.0 parts by mass of alumina fine particles of substantially spherical shape having an average diameter of 0.5 $\mu$m were added and stirred for 2 hours to thoroughly disperse the alumina fine particles. The resulting mixture was then microfiltered through a polypropylene felt filter with a filtering particle size (initial filtration efficiency: 95%) of 10 $\mu$m to prepare a coating solution (D). At this time, the volume ratio of the resin component to the fine particles was 5:95.

<Lamination of Modifying Porous Layer>

The coating solution (D) was applied to the polyolefin microporous membrane (a) in the same manner as in Example 1 and dried to produce a battery separator.

Example 5

<Polyolefin Microporous Membrane>

Similarly to Example 1, the polyolefin microporous membrane (a) was used.

<Preparation of Coating Solution>

To 1.8 parts by mass of CMC, product No. 2200, (available from Daicel Finechem Ltd.), 13.0 parts by mass of a solvent was added and stirred for 2 hours. Subsequently, 85.2 parts by mass of alumina fine particles of substantially spherical shape having an average diameter of 0.5 $\mu$m were added and stirred for 2 hours to thoroughly disperse the alumina fine particles. The resulting mixture was then microfiltered through a polypropylene felt filter with a filtering particle size (initial filtration efficiency: 95%) of 10 $\mu$m to prepare a coating solution (E). At this time, the volume ratio of the resin component to the fine particles was 5.0:95.0.

<Lamination of Modifying Porous Layer>

The coating solution (E) was applied to the polyolefin microporous membrane (a) in the same manner as in Example 1 and dried to produce a battery separator.

Example 6

<Polyolefin Microporous Membrane>

Similarly to Example 1, the polyolefin microporous membrane (a) was used.

<Preparation of Coating Solution>

To 2.0 parts by mass of CMC, product No. 2200, (available from Daicel Finechem Ltd.), 39.4 parts by mass of a solvent was added and stirred for 2 hours. Subsequently, 58.6 parts by mass of alumina fine particles of substantially spherical shape having an average diameter of 0.5 $\mu$m were added and stirred for 2 hours to thoroughly disperse the alumina fine particles. The resulting mixture was then microfiltered through a polypropylene felt filter with a filtering particle size (initial filtration efficiency: 95%) of 10 $\mu$m to prepare a coating solution (F). At this time, the volume ratio of the resin component to the fine particles was 7.9:92.1.

<Lamination of Modifying Porous Layer>

The coating solution (F) was applied to the polyolefin microporous membrane (a) in the same manner as in Example 1 and dried to produce a battery separator.

Example 7

<Polyolefin Microporous Membrane>

Similarly to Example 1, the polyolefin microporous membrane (a) was used.

<Preparation of Coating Solution>

To 6.3 parts by mass of "ACRYSET" (registered trademark) TF-300 (available from Nippon Shokubai Co., Ltd.) (solid component: 40%), 48.0 parts by mass of a solvent was added and stirred for 2 hours. Subsequently, 64.2 parts by mass of alumina fine particles of substantially spherical shape having an average diameter of 0.5 $\mu$m were added and stirred for 2 hours to thoroughly disperse the alumina fine particles. The resulting mixture was then micro filtered through a polypropylene felt filter with a filtering particle size (initial filtration efficiency: 95%) of 10 $\mu$m to prepare a coating solution (H). At this time, the volume ratio of the resin component to the fine particles was 8:92.

<Lamination of Modifying Porous Layer>

The coating solution (H) was applied to the polyolefin microporous membrane (a) in the same manner as in Example 1 and dried to produce a battery separator.

Example 8

<Polyolefin Microporous Membrane>

In producing a polyolefin microporous membrane, the same procedure as in Example 1 was repeated to produce a polyolefin microporous membrane (b), except for using a polyethylene composition comprising 30% by mass of an UHMWPE having a Mw of $2.0 \times 10^6$ and 70% by mass of a HDPE having a Mw of $2.8 \times 10^5$.

<Lamination of Modifying Porous Layer>

The coating solution (D) was applied to the polyolefin microporous membrane (b) in the same manner as in Example 1 and dried to produce a battery separator.

Example 9

<Polyolefin Microporous Membrane>

One hundred parts by mass of a polyethylene (PE) composition comprising 30% by mass of an ultra-high molecular weight polyethylene (UHMWPE) having a mass average molecular weight (Mw) of $2.5 \times 10^6$ and 70% by mass of a high density polyethylene (HDPE) having a Mw of $3.0 \times 10^5$ was dry-blended with 0.375 parts by mass of tetrakis[methylene-3-(3,5-ditertiarybutyl-4-hydroxyphenyl)-propionate]methane to obtain a mixture.

Twenty-five parts by mass of the mixture obtained was charged into a strong-kneading twin-screw extruder (feed rate Q of the polyethylene composition: 120 kg/h). Seventy-five parts by mass of liquid paraffin was fed to the twin-screw extruder via a side feeder, and melt-blended at a temperature of 210°C while keeping the screw speed Ns at 400 rpm (Q/Ns: 0.3 kg/h/rpm) to prepare a polyethylene solution.

The polyethylene solution obtained was fed from the twin-screw extruder to a T-die, and extruded into a sheet shape. The extrudate was cooled by taking it up around a cooling roll controlled at 50°C to form a gel-like sheet. The gel-like sheet obtained was simultaneously biaxially stretched 5X at a speed of 20%/sec in both MD and TD with a batch-type stretching machine at 114°C to obtain a gel-like sheet. This gel-like sheet was fixed to a frame plate (size: 30 cm $\times$ 30 cm, made of aluminum) and immersed in a washing bath of methylene chloride controlled at 25°C, and washed while being swayed at 100 rpm for 3 minutes to remove the liquid paraffin. The washed membrane was air-dried at room temperature, fixed to a tenter, and heat-set at 126°C for 10 minutes to produce a polyolefin microporous membrane (d) having a thickness of 16 $\mu$m.

<Lamination of Modifying Porous Layer>

The coating solution (D) was applied to the polyolefin microporous membrane (d) in the same manner as in Example 1 and dried to produce a battery separator.

Example 10

<Polyolefin Microporous Membrane>

One hundred parts by mass of a polyethylene (PE) composition comprising 20% by mass of an ultra-high molecular weight polyethylene (UHMWPE) having a mass average molecular weight (Mw) of $2.5 \times 10^6$ and 80% by mass of a high density polyethylene (HDPE) having a Mw of $3.0 \times 10^5$ was dry-blended with 0.375 parts by mass of tetrakis[methylene-3-(3,5-ditertiarybutyl-4-hydroxyphenyl)-propionate]methane to obtain a mixture. The PE composition comprising the UHMWPE and the HDPE had a $\Delta Hm_{\leq 125°C}$ of 16% and a $T_{50\%}$ of 132.9°C.

Twenty-five parts by mass of the mixture obtained was charged into a strong-kneading twin-screw extruder (feed rate Q of the polyethylene composition: 72 kg/h). Seventy-five parts by mass of liquid paraffin was fed to the twin-screw extruder via a side feeder, and melt-blended at a temperature of 210°C while keeping the screw speed Ns at 240 rpm (Q/Ns: 0.3 kg/h/rpm) to prepare a polyethylene solution.

The polyethylene solution obtained was fed from the twin-screw extruder to a T-die, and extruded into a sheet shape. The extrudate was cooled by taking it up around a cooling roll controlled at 50°C to form a gel-like sheet. The gel-like sheet obtained was simultaneously biaxially stretched 5X at a speed of 20%/sec in both MD and TD with a batch-type stretching machine at 118°C to obtain a gel-like sheet. This gel-like sheet was fixed to a frame plate (size: 30 cm $\times$ 30 cm, made of aluminum) and immersed in a washing bath of methylene chloride controlled at 25°C, and washed while being swayed at 100 rpm for 3 minutes to remove the liquid paraffin. The washed membrane was air-dried at room temperature, fixed to a tenter, and heat-set at 119°C for 10 minutes to produce a polyolefin microporous membrane (e) having a thickness of 12 $\mu$m.

<Lamination of Modifying Porous Layer>

The coating solution (D) was applied to the polyolefin microporous membrane (e) in the same manner as in Example 1 and dried to produce a battery separator.

Example 11

<Polyolefin Microporous Membrane>

In producing a polyolefin microporous membrane, the same procedure as in Example 1 was repeated to produce a polyolefin microporous membrane (f), except that a polyethylene composition with a $\Delta Hm_{\leq 125°C}$ of 16% and a $T_{50\%}$ of 132.9°C comprising 20% by mass of an UHMWPE having a Mw of $2.5 \times 10^6$ and 80% by mass of a HDPE having a Mw of $3.0 \times 10^5$ was used, and a gel-like sheet was stretched at 114°C.

<Lamination of Modifying Porous Layer>

The coating solution (D) was applied to the polyolefin microporous membrane (f) in the same manner as in Example 1 and dried to produce a battery separator.

Comparative Example 1

<Polyolefin Microporous Membrane>

A modifying porous layer was not laminated, and the polyolefin microporous membrane (a) was used as a battery separator.

Comparative Example 2

<Polyolefin Microporous Membrane>

Similarly to Example 1, the polyolefin microporous membrane (a) was used.

<Preparation of Coating Solution>

To 6.0 parts by mass of CMC, product No. 2200, (available from Daicel Finechem Ltd.), 50.0 parts by mass of a solvent was added and stirred for 2 hours. Subsequently, 44.0 parts by mass of alumina fine particles of substantially spherical shape having an average diameter of 0.5 μm were added and stirred for 2 hours to thoroughly disperse the alumina fine particles. The resulting mixture was then microfiltered through a polypropylene felt filter with a filtering particle size (initial filtration efficiency: 95%) of 10 μm to prepare a coating solution (I). At this time, the volume ratio of the resin component to the fine particles was 25.4:74.6.

<Lamination of Modifying Porous Layer>

The coating solution (I) was applied to the polyolefin microporous membrane (a) in the same manner as in Example 1 and dried to produce a battery separator. Comparative Example 3

<Polyolefin Microporous Membrane>

In producing a polyolefin microporous membrane, 100 parts by mass of a polyethylene (PE) composition comprising 20% by mass of an UHMWPE having a Mw of $2.5 \times 10^6$ and 80% by mass of a HDPE having a Mw of $3.0 \times 10^5$ was dry-blended with 0.375 parts by mass of tetrakis[methylene-3-(3,5-ditertiarybutyl-4-hydroxyphenyl)-propionate]methane to obtain a mixture. The PE composition had a $\Delta Hm_{\leq 125°C}$ of 21% and a $T_{50\%}$ of 132.2°C.
The same procedure as in Example 1 was repeated to produce a polyolefin microporous membrane (g), except that 25 parts by mass of the mixture obtained was charged into a strong-kneading twin-screw extruder (feed rate Q of the polyethylene composition: 54 kg/h); 75 parts by mass of liquid paraffin was fed to the twin-screw extruder via a side feeder and melt-blended at a temperature of 210°C while keeping the screw speed Ns at 720 rpm (Q/Ns: 0.075 kg/h/rpm) to prepare a polyethylene solution; a gel-like sheet was stretched at 114°C; and the heat-setting temperature was 120°C.

<Lamination of Modifying Porous Layer>

The coating solution (D) was applied to the polyolefin microporous membrane (g) in the same manner as in Example 1 and dried to produce a battery separator.

Comparative Example 4

<Polyolefin Microporous Membrane>

In producing a polyolefin microporous membrane, the same procedure as in Example 1 was repeated to produce a polyolefin microporous membrane (c), except that a polyethylene composition comprising 20% by mass of an UHMWPE having a Mw of $2.5 \times 10^6$ and 80% by mass of a HDPE having a Mw of $3.0 \times 10^5$ was used; the stretching speed was 100%; re-stretching was not carried out; and the heat-setting temperature was 120°C.

<Lamination of Modifying Porous Layer>

The coating solution (D) was applied to the polyolefin microporous membrane (c) in the same manner as in Example 1 and dried to produce a battery separator.

The resin composition, membrane-forming conditions, and physical properties of the polyolefin microporous membranes produced in Examples 1 to 11 and Comparative Examples 1 to 4 are shown in Table 1, and the physical properties of the battery separators are shown in Table 2 and 3. Notes (1) to (3) in Tables 1 to 3 are described below.

Notes:

(1) Mw represents a mass average molecular weight.

(2) Q represents a feed rate of a polyethylene composition into a twin-screw extruder, and Ns represents a screw speed.

(3) The difference between the shutdown temperature of a polyolefin microporous membrane and the shutdown temperature of a battery separator.

[Table 1]

| | | | Examples 1-7, Comparative Examples 1-2 | Example 8 | Example 9 | Example 10 | Example 11 | Comparative Example 3 | Comparative Example 4 |
|---|---|---|---|---|---|---|---|---|---|
| Polyolefin microporous membrane | | | a | b | d | e | f | g | c |
| Resin composition | UHMWPE | $Mw^{(1)}$ | $2.5 \times 10^6$ | $2.0\text{-}10^6$ | $2.5 \times 10^6$ | $2.5 \times 10^6$ | $2.5 \times 10^6$ | $2.5 \times 10^6$ | $2.5 \times 10^6$ |
| | | mass% | 30 | 30 | 30 | 20 | 20 | 20 | 20 |
| | HDPE | $Mw^{(1)}$ | $2.8 \times 10^5$ | $2.8 \times 10^5$ | $3.0 \times 10^5$ | $3.0 \times 10^5$ | $3.0 \times 10^5$ | $3.0 \times 10^5$ | $3.0 \times 10^5$ |
| | | mass% | 70 | 70 | 70 | 80 | 80 | 80 | 80 |
| | Low molecular weight PE | $Mw^{(1)}$ | - | - | - | - | - | - | - |
| | | mass% | - | - | - | - | - | - | - |

| | | | Examples 1-7, Comparative Examples 1-2 | Example 8 | Example 9 | Example 10 | Example 11 | Comparative Example 3 | Comparative Example 4 |
|---|---|---|---|---|---|---|---|---|---|
| Polyolefin microporous membrane | | | a | b | d | e | f | g | c |
| Film making conditions | PE solution concentration | mass% | 25 | 25 | 25 | 25 | 25 | 25 | 25 |
| | condition $Q^{(4)}/Ns^{(2)}$ | | 0.300 | 0.300 | 0.300 | 0.300 | 0.300 | 0.075 | 0.300 |
| | Kneading | kg/h/rpm | | | | | | | |
| | Stretching temperature | °C | 116 | 116 | 114 | 118 | 116 | 114 | 116 |
| | Stretching magnification (MDxTD) | | 5×5 | 5×5 | 5×5 | 5×5 | 5×5 | 5×5 | 5×5 |
| | Deforming speed | %/sec | 20 | 20 | 20 | 20 | 20 | 20 | 100 |
| | Re-stretching temperature | °C | 127 | 127 | - | - | 127 | 127 | - |
| | re-stretching direction | | TD | TD | - | - | TD | TD | - |
| | Re-stretching magnification | | 1.4 | 1.4 | - | - | 1.4 | 1.4 | - |
| | Heat setting treatment temperature | °C | 127 | 127 | 126 | 119 | 127 | 127 | 120 |
| | Heat setting treatment time | min | 10 | 10 | 10 | 10 | 10 | 10 | 10 |

(continued)

| | | | Examples 1-7, Comparative Examples 1-2 | Example 8 | Example 9 | Example 10 | Example 11 | Comparative Example 3 | Comparative Example 4 |
|---|---|---|---|---|---|---|---|---|---|
| Polyolefin microporous membrane | | | a | b | d | e | f | g | c |
| Properties of polyolefin microporous membrane | Average membrane thickness | μm | 9 | 9 | 16 | 12 | 9 | 9 | 9 |
| | Averaae pore size | μm | 0.13 | 0.10 | 0.10 | 0.12 | 0.10 | 0.08 | 0.09 |
| | Air resistance | sec/100ccAir | 70 | 345 | 380 | 170 | 350 | 498 | 400 |
| | Tensile rupture strength (MD) | kPa | 118660 | 131520 | 132500 | 111796 | 123680 | 80360 | 127600 |
| | Tensile rupture strength (TD) | kPa | 147100 | 117800 | 115840 | 78453 | 108000 | 64680 | 117800 |
| | Tensile rupture elongation (MD) | % | 130 | 210 | 210 | 170 | 230 | 70 | 180 |
| | Tensile rupture elongation (TD) | % | 105 | 280 | 290 | 200 | 310 | 110 | 250 |
| | Shutdown sarting temperature | °C | 124.5 | 125.2 | 124.4 | 124.5 | 124.3 | 121.5 | 123.9 |
| | Shutdown speed | sec/100cc/°C | 14100 | 19800 | 14000 | 14100 | 14700 | 9700 | 14000 |
| | Shutdown temperature | °C | 134.7 | 134.9 | 133.9 | 133.7 | 133.8 | 132.8 | 133.6 |
| | Shrinkage ratio (TD) | % | 5 | 15 | 14 | 11 | 12 | 10 | 27 |
| | Meltdown temperature | °C | 162 | 160 | 162 | 162 | 161 | 144 | 160 |

[Table 2]

| | | Example 1 | Example 2 | Example 3 | Example 4 | Example 5 | Example 6 | Example 7 |
|---|---|---|---|---|---|---|---|---|
| Coating solution | Coating thickness (μm) | 2 | 2 | 2 | 2 | 2 | 2 | 2 |
| | Water soluble resin concentration (mass%) | 0.8 | 1 | 1.2 | 1.5 | 1.8 | 2 | 6.3 |
| | Volume ratio of Water soluble resin or Water dispersible resin to solid content (%) | 5 | 5 | 5 | 5 | 5 | 7.9 | 8 |
| Multi-layer constitution | Coating solution | A | B | C | D | E | F | H |
| | Polyolefin microporous membrane | a | a | a | a | a | a | a |
| Properties of Battery separator | Average membrane thickness (μm) | 11 | 11 | 11 | 11 | 11 | 11 | 11 |
| | Air resistance (sec/100cc) | 84 | 88 | 91 | 93 | 94 | 94 | 93 |
| | Increase ratio of Air resistance (%) | 120 | 126 | 130 | 133 | 134 | 134 | 133 |
| | Shutdown temperature (°C) | 136 | 136.4 | 136.7 | 137.5 | 138.1 | 138.7 | 137.3 |
| | Shutdown temperature difference (3) (°C) | 1.3 | 1.7 | 2.0 | 2.8 | 3.4 | 4.0 | 2.6 |
| | Meltdown temperature (°C) | >200 | >200 | >200 | >200 | >200 | >200 | >200 |
| | Heat resistance (Shrinkage ratio) (%) | 1.3 | 1.2 | 1.0 | 0.9 | 0.8 | 0.8 | 1.0 |
| | Peeling strength between Modified porous layer and Polyolefin porous membrane (N/25mm) | 0.8 | 1.3 | 1.5 | 1.8 | 1.9 | 2.0 | 1.7 |

[Table 3]

| | | Example 8 | Example 9 | Example 10 | Example 11 | Comparative Example | Comparative Example 2 | Comparative Example 3 | Comparative Example 4 |
|---|---|---|---|---|---|---|---|---|---|
| Coating solution | Coating thickness (µm) | 2 | 2 | 2 | 2 | - | 2 | 2 | 2 |
| | Water soluble resin concentration (mass%) | 1.5 | 1.5 | 1.5 | 1.5 | - | 6 | 1.5 | 1.5 |
| | Volume ratio of Water soluble resin or Water dispersible resin to solid content (%) | 5 | 5 | 5 | 5 | - | 25.4 | 5 | 5 |
| | Coating solution | D | D | D | D | - | I | D | D |
| Multi-layer constitution | Polyolefin microporous membrane | b | d | e | f | a | a | g | c |
| Properties of Battery separator | Average membrane thickness (µm) | 11 | 18 | 14 | 11 | 9 | 11 | 11 | 11 |
| | Air resistance (sec/100cc) | 407 | 464 | 204 | 403 | 70 | 98 | 539 | 460 |
| | Increase ratio of Air resistance (%) | 118 | 122 | 120 | 115 | 100 | 157 | 110 | 115 |
| | Shutdown temperature (°C) | 135.4 | 135.5 | 135.3 | 136.3 | 134.7 | 139.5 | 139.5 | 135.2 |
| | Shutdown temperature difference (3) (°C) | 0.5 | 1.6 | 1.6 | 2.5 | 0 | 4.8 | 6.7 | 1.6 |
| | Meltdown temperature (°C) | >200 | >200 | >200 | >200 | 162 | >200 | >200 | >200 |
| | Heat resistance (Shrinkage ratio) (%) | 1.7 | 2.0 | 1.8 | 2.2 | 5.0 | 0.3 | 1.5 | 2.4 |
| | Peeling strength between Modified porous layer and Polyolefin porous membrane (N/25mm) | 1.3 | 1.3 | 1.3 | 1.3 | - | 3.0 | 1.3 | 1.3 |

Table 1 shows that the polyolefin microporous membranes of Examples 1 to 11 have shutdown properties, i.e., a shutdown start temperature of not higher than 130°C, a shutdown speed of not less than 10,000 sec/100 cc/°C, and a shutdown temperature of not higher than 135°C, and are also excellent in permeability and mechanical strength. It can be seen that the laminated polyolefin microporous membranes (battery separators) obtained by laminating a modifying porous layer on these polyolefin microporous membranes have a shutdown temperature that is slightly different from the shutdown temperature of the polyolefin microporous membrane and have an extremely high heat resistance.

On the other hand, the battery separator of Comparative Example 1 has poor properties since a modifying porous layer is not laminated. The battery separators of Comparative Examples 2 to 3 are poor in any one of shutdown properties, permeability, and physical strength.

Industrial Applicability

The battery separator according to the present invention are excellent in shutdown properties, heat resistance, and physical strength, and can be suitably used as a nonaqueous electrolyte battery separator, in particular, a lithium ion secondary battery separator.

**Claims**

1.    A battery separator which is a laminated polyolefin microporous membrane, comprising:

    a polyolefin microporous membrane; and
    a modifying porous layer comprising a water-soluble resin or water-dispersible resin, and fine particles, the modifying porous layer being laminated on at least one surface of the polyolefin microporous membrane, wherein the polyolefin microporous membrane comprises a polyethylene resin and has (a) a shutdown temperature (a temperature at which an air resistance measured while heating the polyolefin microporous membrane at a temperature rise rate of 5°C/min reaches $1 \times 10^5$ sec/100 cc) of 135°C or lower, (b) a rate of air resistance change (a gradient of a curve representing dependency of the air resistance on temperature at an air resistance of $1 \times 10^4$ sec/100 cc) of $1 \times 10^4$ sec/100 cc/°C or more, (c) a transverse shrinkage rate at 130°C (measured by thermomechanical analysis under a load of 2 gf at a temperature rise rate of 5°C/min) of 20% or less, and (d) a thickness of 16 $\mu$m or less, the shutdown temperature difference between the polyolefin microporous membrane and the laminated polyolefin microporous membrane being 4.0°C or less.

2.    The battery separator according to claim 1, wherein the water-soluble resin or water-dispersible resin comprises at least one of carboxymethylcellulose and an acrylic resin.

3.    The battery separator according to claim 1 or 2, wherein the fine particles are at least one selected from titanium dioxide, alumina, and boehmite.

4.    The battery separator according to any one of claims 1 to 3, wherein the polyethylene resin has a $\Delta Hm_{\leq 125°C}$, a cumulative endotherm heat up to 125°C relative to a heat of crystal melting measured by differential scanning calorimetry at a temperature rise rate of 10°C/min, of not more than 20% and a $T_{50\%}$, a temperature at the time when the endotherm reaches 50% of the heat of crystal melting, of 135°C or lower.

5.    The battery separator according to any one of claims 1 to 4, wherein the polyethylene resin comprises a copolymer of ethylene and any other $\alpha$-olefin.

6.    The battery separator according to any one of claims 1 to 5, wherein the polyethylene resin comprises a copolymer of ethylene and any other $\alpha$-olefin, and the copolymer is produced using a single-site catalyst and has a mass average molecular weight of not less than $1 \times 10^4$ but less than $7 \times 10^6$.

7.    A method of producing the battery separator according to any one of claims 1 to 6, comprising the steps of:

    (a) preparing a polyolefin resin solution by melt-kneading a polyolefin resin comprising a polyethylene resin with a membrane-forming solvent in a twin-screw extruder such that the ratio of a feed rate Q (kg/h) of the polyolefin resin to a screw speed Ns (rpm) (Q/Ns) is 0.1 to 0.55 Kg/h/rpm, the polyethylene resin having a $\Delta Hm_{\leq 125°C}$, a cumulative endotherm up to 125°C relative to a heat of crystal melting measured by differential scanning calorimetry at a temperature rise rate of 10°C/min, of not more than 20% and a $T_{50\%}$, a temperature at the time when the endotherm reaches 50% of the heat of crystal melting, of 135°C or lower;
(b) forming a gel-like sheet by extruding the polyolefin resin solution through a die and cooling the extrudate;
(c) stretching the gel-like sheet at a rate of 1 to 80%/sec relative to 100% of the length before stretching;
(d) removing the membrane-forming solvent to obtain a polyolefin microporous membrane; and
(e) applying a coating solution comprising a water-soluble resin or water-dispersible resin, and fine particles to at least one surface of the polyolefin microporous membrane obtained above, followed by drying, wherein the volume ratio of the water-soluble resin or water-dispersible resin to the fine particles is 2 to 8% and the concentration of the water-soluble resin or water-dispersible resin is 0.8 to 5%.

**Patentansprüche**

1. Batterieseparator, der eine laminierte mikroporöse Polyolefin-Membran ist und Folgendes umfasst:

   eine mikroporöse Polyolefin-Membran; und
   eine modifizierende poröse Schicht, die ein wasserlösliches Harz oder ein wasserdispergierbares Harz und Feinteilchen umfasst, wobei die modifizierende poröse Schicht auf zumindest einer Oberfläche der mikroporösen Polyolefin-Membran auflaminiert ist, wobei die mikroporöse Polyolefin-Membran ein Polyethylenharz umfasst und (a) eine Sperrtemperatur (die Temperatur, bei der jener Luftwiderstand, der gemessen wird, während die mikroporöse Polyolefin-Membran mit einer Temperaturerhöhungsrate von 5 °C/min erhitzt wird, 1 x 10$^5$ s/100 cm$^3$ erreicht) von 135 °C oder weniger, (b) eine Luftwiderstandsänderungsrate (der Gradient jener Kurve, die die Abhängigkeit des Luftwiderstands von der Temperatur bei einem Luftwiderstand von 1 x 10$^4$ s/100 cm$^3$ darstellt) von 1 x 10$^4$ s/100 cm$^3$/°C oder mehr, (c) eine Schrumpfungsrate in Querrichtung bei 130 °C (gemessen mittels thermomechanischer Analyse unter einer Last von 2 Pond bei einer Temperaturerhöhungsrate von 5 °C/min) von 20 % oder weniger und (d) eine Dicke von 16 µm oder weniger aufweist, wobei die Sperrtemperaturdifferenz zwischen der mikroporösen Polyolefin-Membran und der laminierten mikroporösen Polyolefin-Membran 4,0 °C oder weniger beträgt.

2. Batterieseparator nach Anspruch 1, worin das wasserlösliche Harz oder das wasserdispergierbare Harz Carboxymethylcellulose und/oder ein Acrylharz umfasst.

3. Batterieseparator nach Anspruch 1 oder 2, worin die Feinteilchen zumindest eines von Titandioxid, Aluminiumoxid und Böhmit sind.

4. Batterieseparator nach einem der Ansprüche 1 bis 3, worin das Polyethylenharz ein $\Delta Hm_{\leq 125°C}$, die kumulative endotherme Wärme bis 125 °C, bezogen auf die Kristallschmelzwärme, gemessen mittels Differentialrasterkalorimetrie bei einer Temperaturerhöhungsrate von 10 °C/min, von nicht mehr als 20 %, sowie eine $T_{50\%}$, jene Temperatur, bei der die Endotherme 50 % der Kristallschmelzwärme erreicht, von 135°C oder weniger aufweist.

5. Batterieseparator nach einem der Ansprüche 1 bis 4, worin das Polyethylenharz ein Copolymer von Ethylen mit einem beliebigen anderen α-Olefin umfasst.

6. Batterieseparator nach einem der Ansprüche 1 bis 5, worin das Polyethylenharz ein Copolymer von Ethylen mit einem beliebigen anderen α-Olefin umfasst und das Copolymer unter Verwendung eines Single-site-Katalysators hergestellt wird und ein gewichtsmittleres Molekulargewicht von nicht weniger als 1 x 10$^4$, aber weniger als 7 x 10$^6$ aufweist.

7. Verfahren zur Herstellung eines Batterieseparators nach einem der Ansprüche 1 bis 6, das die folgenden Schritte umfasst:

   (a) Herstellen einer Polyolefin-Harzlösung durch Schmelzkneten eines ein Polyethylenharz umfassenden Polyolefinharzes mit einem membranbildenden Lösungsmittel in einem Doppelschneckenextruder, so dass das Verhältnis zwischen der Zufuhrrate Q (kg/h) des Polyolefinharzes und der Schneckengeschwindigkeit Ns (U/min) (Q/Ns) 0,1 bis 0,55 kg/h/U/min beträgt, wobei das Polyethylenharz ein $\Delta Hm_{\leq 125°C}$, die kumulative Endotherme bis 125 °C, bezogen auf die Kristallschmelzwärme, gemessen mittels Differentialrasterkalorimetrie bei einer Temperaturerhöhungsrate von 10 °C/ min, von nicht mehr als 20 %, sowie eine $T_{50\%}$, jene Temperatur, bei der die Endotherme 50 % der Kristallschmelzwärme erreicht, von 135 °C oder weniger aufweist;
   (b) Ausbilden einer gelähnlichen Bahn durch Extrudieren der Polyolefin-Harzlösung durch eine Düse und Abkühlen des Extrudats;

(c) Recken der gelähnlichen Bahn mit einer Rate von 80 %/s, bezogen auf 100 % der Länge vor dem Recken;

(d) Entfernen des membranbildenden Lösungsmittels, um eine mikroporöse Polyolefin-Membran zu erhalten; und

(e) Aufbringen einer Beschichtungslösung, die ein wasserlösliches Harz oder ein wasserdispergierbares Harz umfasst, und Feinteilchen auf zumindest eine Oberfläche der oben erhaltenen mikroporösen Polyolefin-Membran, gefolgt von Trocknung, wobei das Volumenverhältnis zwischen dem wasserlöslichen Harz oder wasserdispergierbaren Harz und den Feinteilchen 2 bis 8 % beträgt und die Konzentration des wasserlöslichen Harzes oder wasserdispergierbaren Harzes 0,8 bis 5 % beträgt.

## Revendications

1. Séparateur pour piles qui est une membrane microporeuse en polyoléfine stratifiée, comprenant :

   une membrane microporeuse en polyoléfine ; et
   une couche poreuse modificatrice comprenant une résine soluble dans l'eau ou une résine dispersible dans l'eau, et de fines particules, la couche poreuse modificatrice étant déposée sur au moins une surface de la membrane microporeuse en polyoléfine, la membrane microporeuse en polyoléfine comprenant une résine de polyéthylène et ayant (a) une température d'arrêt (une température à laquelle une résistance à l'air mesurée au cours du chauffage de la membrane microporeuse en polyoléfine à un taux d'élévation de la température de 5 °C/min atteint $1 \times 10^5$ s/100 cm$^3$) inférieure ou égale à 135 °C, (b) un taux de changement de la résistance à l'air (un gradient d'une courbe représentant la dépendance de la résistance à l'air à la température à une résistance à l'air de $1 \times 10^4$ s/100 cm$^3$) supérieur ou égal à $1 \times 10^4$ s/100 cm$^3$/°C, (c) un taux de retrait transversal à 130 °C (mesuré par analyse thermomécanique sous une charge de 2 gf à un taux d'élévation de la température de 5 °C/min) inférieur ou égal à 20 %, et (d) une épaisseur inférieure ou égale à 16 $\mu$m, la différence de température d'arrêt entre la membrane microporeuse en polyoléfine et la membrane microporeuse en polyoléfine stratifiée étant inférieure ou égale à 4,0 °C.

2. Séparateur pour piles selon la revendication 1, dans lequel la résine soluble dans l'eau ou la résine dispersible dans l'eau comprend au moins l'une de la carboxyméthylcellulose et d'une résine acrylique.

3. Séparateur pour piles selon la revendication 1 ou 2, dans lequel les fines particules sont constituées d'au moins un composé choisi parmi le dioxyde de titane, l'alumine et la boehmite.

4. Séparateur pour piles selon l'une quelconque des revendications 1 à 3, dans lequel la résine de polyéthylène a un $\Delta$Hm $\leq$ 125 °C, une chaleur d'endotherme cumulé jusqu'à 125 °C par rapport à une chaleur de fusion cristalline mesurée par analyse calorimétrique à compensation de puissance à un taux d'élévation de la température de 10 °C/min, d'au plus 20 %, et une $T_{50\%}$, une température au moment où l'endotherme atteint 50 % de la chaleur de fusion cristalline, inférieure ou égale à 135 °C.

5. Séparateur pour piles selon l'une quelconque des revendications 1 à 4, dans lequel la résine de polyéthylène comprend un copolymère d'éthylène et de toute autre $\alpha$-oléfine.

6. Séparateur pour piles selon l'une quelconque des revendications 1 à 5, dans lequel la résine de polyéthylène comprend un copolymère d'éthylène et de toute autre $\alpha$-oléfine, et le copolymère est produit à l'aide d'un catalyseur à site unique et a un poids moléculaire moyen en masse d'au moins $1 \times 10^4$ mais inférieur à $7 \times 10^6$.

7. Procédé de fabrication du séparateur pour piles selon l'une quelconque des revendications 1 à 6, comprenant les étapes suivantes :

   (a) préparation d'une solution de résine polyoléfinique par malaxage à l'état fondu d'une résine polyoléfinique comprenant une résine de polyéthylène à l'aide d'un solvant formant une membrane dans une extrudeuse à double vis de manière à ce que le rapport d'un taux d'alimentation Q (kg/h) de la résine polyoléfinique à une vitesse de vis Ns (tr/min) (Q/Ns) soit de 0,1 à 0,55 kg/h/tr/min, la résine de polyéthylène ayant un $\Delta$Hm $\leq$ 125 °C, un endotherme cumulé jusqu'à 125 °C par rapport à une chaleur de fusion cristalline mesurée par analyse calorimétrique à compensation de puissance à un taux d'élévation de la température de 10 °C/min, d'au plus 20 %, et une $T_{50\%}$, une température au moment où l'endotherme atteint 50 % de la chaleur de fusion cristalline, inférieure ou égale à 135 °C ;
(b) formation d'un film de type gel par extrusion de la solution de résine polyoléfinique à travers une filière et refroidissement de l'extrudat ;
(c) étirage du film de type gel à un taux de 1 à 80 %/s par rapport à 100 % de la longueur avant étirage ;
(d) élimination du solvant formant une membrane pour obtenir une membrane microporeuse en polyoléfine ; et
(e) application d'une solution de revêtement comprenant une résine soluble dans l'eau ou une résine dispersible dans l'eau, et de fines particules sur au moins une surface de la membrane microporeuse en polyoléfine obtenue ci-dessus, suivie d'un séchage, le rapport volumique de la résine soluble dans l'eau ou de la résine dispersible dans l'eau aux fines particules étant de 2 à 8 % et la concentration de la résine soluble dans l'eau ou de la résine dispersible dans l'eau étant de 0,8 à 5 %.

[Fig.1]

[Fig.2]

[Fig.3]

[Fig.4]

[Fig.5]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013046998 A
- JP 2004227972 A
- JP 2012226921 A
- WO 200760991 A
- EP 2750216 A1

- JP 3347854 B
- JP 2006248582 A
- WO 200020493 A
- JP 2002256099 A